# EUROPÄISCHE PATENTSCHRIFT

(11) **EP 2 420 670 B1**
(45) Veröffentlichungstag und Bekanntmachung des Hinweises auf die Patenterteilung: **30.09.2015**
(21) Anmeldenummer: 11173918.1
(22) Anmeldetag: 14.07.2011
(51) Int. Cl.: F03D 11/00, F03D 7/02

(54) **Rotorarretiervorrichtung und Verfahren zum Arretieren eines Rotors einer Windenergieanlage**
Rotor locking device and method for arresting a rotor of a wind energy assembly
Dispositif de verrouillage de rotor et procédé d'arrêt d'un rotor d'une éolienne

(30) Priorität: 20.08.2010 DE 102010039628
(43) Veröffentlichungstag der Anmeldung: 22.02.2012
(73) Patentinhaber: SSB Service GmbH, 48429 Rheine (DE)
(72) Erfinder: Holling, Jochen, 48429 Rheine (DE); Mehren, Michael, 48429 Rheine (DE)
(74) Vertreter: Eisenführ Speiser

(56) Entgegenhaltungen:
- EP-A1- 1 291 521
- EP-A2- 1 167 755
- WO-A1-2005/090780
- US-A1- 2010 021 299

## Beschreibung

Die Erfindung betrifft eine mobile Rotorarretiervorrichtung zum Arretieren eines Rotors einer Windenergieanlage, wobei die Arretierungsvorrichtung ausgebildet ist, einen Rotor derart zu arretieren, dass er an einer Drehung um eine horizontale Achse gehindert und eine Längsachse eines Rotorblatts in einer vertikalen Ebene fixiert ist.

Die Erfindung betrifft weiterhin einen Bausatz für eine mobile Rotorarretiervorrichtung.

Die Erfindung betrifft weiterhin ein Arretierelement für eine mobile Rotorarretiervorrichtung zum Arretieren eines Rotors einer Windenergieanlage.

Die Erfindung betrifft weiterhin ein Verfahren zum Arretieren eines Rotors einer Windenergieanlage.

Es ist bekannt, dass für Service- oder Instandhaltungszwecke, insbesondere an den Rotorblättern eines Rotors, aber auch an anderen Komponenten einer Windenergieanlage, der Rotor temporär, mindestens für die Dauer der Instandhaltungsarbeiten, arretiert werden muss. Das heißt der Rotor wird an einer Drehung in beide Richtungen um seine Rotorachse, die bei modernen Hochleistungswindenergieanlagen üblicherweise horizontal angeordnet ist, gehindert. Auf diese Weise wird ein Stillstand der Windenergieanlage erzeugt, so dass auch insbesondere die während des Betriebs der Windenergieanlage in Bewegung befindlichen Komponenten zu Instandhaltungszwecken sicher zugänglich sind.

Die EP 1 291 521 A1 offenbart eine Windturbine mit einer Gondel auf einem Turm und ferner mit einer Rotorarretiervorrichtung zur Arretierung einer Rotorscheibe und Befestigungsmitteln zur Befestigung der Rotorscheibe an der Gondel. Die EP 1 167 755 A2 offenbart eine Vorrichtung zur Arretierung einer von einem Rohr angetriebenen Welle einer Windkraftanlage Ist mit einer Scheibe, die mit der Welle verbindbar ist, und einem Arretierelement zum Arretieren der Scheibe versehen, das an einem Führungsteil bewegbar gelagert ist, welches an einem Bauteil der Windkraftanlage mit Ausnahme der Scheibe und der Welle angeordnet ist. Die US 2010/0021299 A1 offenbart eine Windturbine mit einem Rotor, einem Gondelrahmengehäuse mit elektrischen Erzeugungsmitteln, die mit dem Rotormittelpunkt gekoppelt sind, Bremsmitteln und Kontrollmitteln, wobei der Gondelrahmen und der Rotormittelpunkt eine Anordnung aufweisen, die ausgebildet ist, eine Drehung des Rotormittelpunkts verhindert, wenn Installations- oder Wartungsarbeiten durchzuführen sind.

Unter dem Begriff Instandhaltung wird im Folgenden insbesondere die Wartung, Inspektion, Reinigung, Instandsetzung, Reparatur und/oder der Austausch von Komponenten einer Windenergieanlage verstanden.

Um solche Instandhaltungsarbeiten durchführen zu können, ist es erforderlich, dass der Rotor einer Windenergieanlage sicher und zuverlässig an einer Drehung gehindert wird, damit einerseits Schäden an der Windenergieanlage und ihren Komponenten während der Instandhaltungsarbeiten, bei denen beispielsweise Komponenten oder Teile davon demontiert und damit nicht betriebsfähig sind, verhindert werden und andererseits die mit den Instandhaltungsarbeiten beschäftigten Personen nicht zu Schaden kommen.

Der Rotor einer Windenergieanlage umfasst eine Rotornabe mit daran befestigten, bei modernen Windenergieanlagen üblicherweise drei, Rotorblättern. Für Instandhaltungsarbeiten an einem Rotorblatt hat sich in der Praxis herausgestellt, dass eine Arretierung des instand zu haltenden Rotorblattes in einer so genannten "6-Uhr-Position" besonders bevorzugt ist. In dieser 6-Uhr-Position ist die Längsachse des instand zu haltende Rotorblatts in einer vertikalen Ebene angeordnet. Diese vertikale Ebene umfasst eine vertikale Längsachse des Turms der Windenergieanlage und die horizontale Drehachse des Rotors. Wenn die Längsachse eines Rotorblatts in dieser vertikalen Ebene angeordnet ist, zeigt das Rotorblatt im Wesentlichen in Richtung Boden. Bei einem Rotor mit drei Rotorblättern zeigen in dieser 6-Uhr-Position des instand zu haltenden Rotorblatts die anderen beiden Rotorblätter in einer 2- bzw. 10-Uhr-Position schräg nach oben.

Es ist daher eine Aufgabe der vorliegenden Erfindung, eine Rotorarretiervorrichtung zum Arretieren eines Rotors einer Windenergieanlage bereitzustellen, die den Rotor einer Windenergieanlage sicher und zuverlässig, insbesondere mit einem Rotorblatt in der so genannten 6-Uhr-Position, arretiert. Es ist weiterhin eine Aufgabe der vorliegenden Erfindung, eine Rotorarretiervorrichtung zum Arretieren eines Rotors einer Windenergieanlage bereitzustellen, die die Arbeitssicherheit der die Instandhaltungsarbeiten durchführenden Personen verbessert. Es ist weiterhin eine Aufgabe der vorliegenden Erfindung, eine Rotorarretiervorrichtung zum Arretieren eines Rotors einer Windenergieanlage bereitzustellen, welche den Zeitbedarf für Instandhaltungsarbeiten reduziert. Es ist weiterhin eine Aufgabe der vorliegenden Erfindung, eine Rotorarretiervorrichtung zum Arretieren eines Rotors einer Windenergieanlage bereitzustellen, die einfach und sicher durchzuführen bzw. zu montieren ist. Es ist weiterhin eine Aufgabe der vorliegenden Erfindung, eine Rotorarretiervorrichtung zum Arretieren eines Rotors einer Windenergieanlage bereitzustellen, die einfach und sicher zu an einer Windenergieanlage, insbesondere auch an verschiedenen Windenergieanlagen, zu montieren und zu demontieren ist.

Es ist weiterhin eine Aufgabe der vorliegenden Erfindung, entsprechend der für die Rotorarretiervorrichtung formulierten Aufgaben einen Bausatz für eine Rotorarretiervorrichtung, ein verbessertes Arretierelement sowie ein verbessertes Verfahren zum Arretieren eines Rotors einer Windenergieanlage bereitzustellen.

Diese Aufgabe wird erfindungsgemäß gelöst durch eine mobile Rotorarretiervorrichtung gemäß Anspruch 1.

Der Rotor einer Windenergieanlage ist drehmomentsteif an einer Hauptwelle angeordnet, d.h. es findet keine Übersetzung zwischen Hauptwelle und Rotor statt und die Hauptwelle dreht mit der gleichen Drehzahl wie der Rotor. Die Hauptwelle ist entweder direkt, das heißt ohne Getriebe, mit einem Synchrongenerator gekoppelt, der mit der Drehzahl des Rotors betrieben wird. Alternativ ist die Hauptwelle über ein Getriebe und eine Kupplung sowie eine Generatorwelle an einen Asynchrongenerator, meist einen doppelt gespeisten Asynchrongenerator, gekoppelt, der mit einer von der Rotordrehzahl unabhängigen Drehzahl betrieben wird.

Die Hauptwelle ist drehbar in einem Grundrahmen, der auch als Maschinenträger bezeichnet wird, gelagert. Der Grundrahmen beinhaltet neben dem Lager für die Hauptwelle auch Lager für den Generator und gegebenenfalls Getriebe und Kupplung. Der Grundrahmen sowie die genannten Komponenten sind in einer Gondel der Windenergieanlage angeordnet, wobei die Gondel wiederum auf einem Turm angeordnet ist. Die Hauptwelle verläuft dabei wie die Drehachse des Rotors bei modernen Windenergieanlagen meist horizontal.

Im Stand der Technik ist es bekannt, dass Windenergieanlagenhersteller bei Konzeption der Anlage fest installierte Arretiervorrichtungen zur Arretierung des Rotors vorsehen. In der Praxis hat sich jedoch gezeigt, dass die herstellerseitig fest installierten richtungen nicht immer ausgebildet sind, ein Rotorblatt den Anforderungen entsprechend zu arretieren. Insbesondere kann mit den herstellerseitig fest installierten Arretiervorrichtungen teilweise nicht sichergestellt werden, dass ein Rotorblatt, an dem Instandhaltungsarbeiten durchgeführt werden sollen, exakt in der bevorzugten 6-Uhr-Position arretiert wird. Dies ist erforderlich, da zur Rotorblattinstandhaltung ein Flügelbefahrgerät eingesetzt wird, dessen Arbeitsbühne an Seilen vom Maschinenhaus bzw. der Gondel abgelassen wird. Das Flügelbefahrgerät ist dabei auch am Turm der Windenergieanlage über Rollen abgestützt. Für den Einsatz des Flügelbefahrgeräts ist jedoch eine exakte Ausrichtung des instand zu haltenden Rotorblatts erforderlich.

Es existieren beispielsweise Windenergieanlagen, bei denen die Rotornabe so auf der Hauptwelle angeordnet ist, dass keine exakte Arretierung des Rotors mit einem Rotorblatt in der 6-Uhr-Position möglich ist, sondern der nach unten zeigende Rotor bei der Arretierung leicht aus der 6-Uhr-Position ausgelenkt ist, beispielsweise um bis zu 15°. Dies kann beispielsweise der Fall sein, wenn zwischen Rotornabe und Hauptwelle eine ringförmige Lochscheibe angeordnet ist, die 24 um jeweils 15° versetzte Ausnehmungen aufweist. Bei einer herstellerseitig vorgesehenen, fest installierten Arretiervorrichtung können zwei am Grundrahmen in Gussrahmen verschieblich gelagerte Bolzen in zwei der Ausnehmungen eingreifen, um die Lochscheibe - und damit auch Rotor und Hauptwelle - zu arretieren. Je nach Position der Bolzen und der Montage der Rotornabe auf der Lochscheibe, kommt es jedoch zu der beschriebenen, nachteiligen Auslenkung des Rotorblattes aus der 6-Uhr-Position.

Es ist daher erforderlich, anstelle der Arretierung mittels der herstellerseitig vorgesehenen Vorrichtungen die Rotoren von Windenergieanlagen mittels mobiler Rotorarretiervorrichtungen exakt in der 6-Uhr-Position zu arretieren. Mobile Rotorarretiervorrichtungen können nachträglich und temporär für die Dauer von Instandhaltungsarbeiten an einer Windenergieanlage montiert und anschließend wieder demontiert werden. Vorzugsweise können die mobilen Rotorarretiervorrichtungen dann zu anderen Windenergieanlagen transportiert und dort temporär eingesetzt werden.

Bei bisher bekannten mobilen Rotorarretiervorrichtungen wird die Generatorwelle zwischen Generator und Getriebe arretiert, da nach der Übersetzung durch das Getriebe die zu bewältigenden Drehmomente geringer sind.

Der Erfindung liegt jedoch die Erkenntnis zugrunde, dass durch eine Abkehr von den im Stand der Technik üblichen Arretierungsvorrichtungen wesentliche Vorteile erzielt werden können. Eine aus dem Stand der Technik bekannte Arretierung der Generatorwelle zwischen Getriebe und Generator bringt mehrere Nachteile mit sich. Zum einen ist diese Lösung mit Hinblick auf die Arbeitssicherheit zu verbessern, da beispielsweise ein Getriebeschaden dazu führen kann, dass trotz einer sicheren Arretierung der Generatorwelle die Hauptwelle und damit auch der Rotor dreht und eine beispielsweise am Rotor arbeitende Person dadurch verletzt wird oder Komponenten der Windenergieanlage beschädigt werden. Weiterhin ist es für die Arretierung der Generatorwelle erforderlich, die Getriebekupplung zu demontieren, was durch speziell geschulte Anlagentechniker erfolgen muss. Techniker, die auf die Reparatur von Rotorblättern spezialisiert sind, sind üblicherweise nicht ausgebildet, Getriebekupplungen in einer Windenergieanlage zu demontieren, und umgekehrt. Das führt dazu, dass zunächst ein Spezialist bzw. ein Team von Anlagentechnikern die Getriebekupplung demontiert und die Generatorwelle arretiert und anschließend ein Spezialist bzw. ein Team für die Rotorblattinstandhaltung die entsprechende Rotorinstandhaltung durchführt. Anschließend ist wiederum der Spezialist bzw. das Team von Anlagentechnikern einzusetzen, um die Arretierung der Generatorwelle wieder zu demontieren und die Kupplung wieder zu montieren.

Die erfindungsgemäße Lösung sieht hingegen vor, dass direkt die Hauptwelle - und damit auch der an der Hauptwelle drehmomentsteif angeordnete Rotor - arretiert wird und somit die sichere und exakte Arretierung nicht vom Getriebe abhängig ist. Die Erfindung überwindet dabei das Vorurteil, dass mobile Rotorarretiervorrichtungen im Gegensatz zu herstellerseitig vorgesehenen, festinstallierten Arretiervorrichtungen für die Arretierung der Hauptwelle aufgrund der dort auftretenden hohen Drehmomente nicht geeignet sind, da mobile Rotorarretiervorrichtungen aufgrund ihrer Transportfähigkeit kleiner und leichter sein müssen und damit nicht ausreichend dimensioniert werden können, um die an der Hauptwelle vorherrschenden Drehmomente bewältigen zu können.

Die erfindungsgemäße Lösung hat den Vorteil, dass der Zeitaufwand und der zweimalige Einsatz von Spezialisten zur Demontage und Montage der Kupplung eingespart werden kann, da die Demontage der Kupplung bei einer Arretierung der Hauptwelle nicht erforderlich ist.

Weiterhin trägt die erfindungsgemäße Lösung zur Erhöhung der Arbeitssicherheit bei, da direkt die Hauptwelle, auf der der Rotor drehmomentsteif angeordnet ist, arretiert wird und die Arretierung auf diese Weise unabhängig von der Drehmomentkopplung durch das Getriebe und damit auch unabhängig von einem möglichen Getriebeschaden ist. Zwar sind für eine Arretierung der Hauptwelle größere Drehmomente zu bewältigen und daher auch schwerere, entsprechend ausgebildete Arretierelemente vorzusehen. Dieser Nachteil wird jedoch erstens durch die genannten Vorteile mehr als aufgewogen und zweitens durch die Ausgestaltung der vorliegenden Erfindung, insbesondere auch in den unten dargestellten bevorzugten Fortbildungen und Ausführungsformen, gemindert.

Die Erfindung sieht vor, dass die Rotorarretiervorrichtung ein erstes und ein zweites Arretierelement umfasst.

Vorzugsweise sind zwei Arretierelemente vorgesehen, die an zwei unterschiedlichen Stellen der Hauptwelle montiert werden und somit zwei Angriffspunkte zur Arretierung des Rotors existieren. Dies hat zum einen den Vorteil, dass die mobile Rotorarretiervorrichtung einfach zu transportieren und zu montieren/demontieren ist, da zwei Arretierelemente, die kleiner und leichter ausgebildet sein können als ein einzelnes, besser zu handhaben sind. Weiterhin kann das Vorsehen von zwei Arretierelementen die Sicherheit der Rotorarretierung erhöhen, da beim Ausfall oder dem Versagen eines Arretierelements noch das zweite Arretierelement - bei entsprechender Dimensionierung - unabhängig von dem ersten die Rotorarretierung (zumindest für einen bestimmten Zeitraum) sichern kann.

Die Erfindung sieht weiterhin vor dass das erste Arretierelement ausgebildet ist, eine Hauptwelle gegen eine Drehung um ihre Längsachse in einer ersten Richtung zu fixieren und das zweite Arretierelement ausgebildet ist, eine Hauptwelle gegen eine Drehung um ihre Längsachse in einer zweiten, der ersten entgegengesetzten, Richtung zu fixieren.

Eine besonders bevorzugte Ausführungsform sieht vor, dass die beiden Arretierelemente unterschiedliche Arretierungsfunktionen haben, nämlich den Rotor in Bezug auf unterschiedliche Drehrichtungen fixieren. Dies erleichtert einerseits die Montage/Demontage der Rotorarretiervorrichtung und erlaubt andererseits eine besonders einfache Ausgestaltung der Arretierelemente. Auf diese Weise sind für die Montage/Demontage der Rotorarretiervorrichtung - anders als bei einer Montage/Demontage einer Kupplung und einer Arretiervorrichtung, die die Generatorwelle fixiert - keine Spezialisten erforderlich, d.h. die Rotorarretiervorrichtung kann von Personen, die eine Rotorblattinstandhaltung durchführen, montiert und demontiert werden.

Die Erfindung sieht weiterhin vor, dass jedes der beiden Arretierelemente eine Befestigungsvorrichtung zur Befestigung des Arretierelements an einer Hauptwelle und weiterhin eine Anlagefläche zur Übertragung von Druckkräften auf einen ortsfesten Grundrahmen aufweist.

Vorzugsweise werden die Arretierelemente mit Befestigungsvorrichtungen, beispielsweise mit Muttern und durch eine Verschraubung, an der Hauptwelle lösbar befestigt. Insbesondere ist es bevorzugt, dass die Arretierelemente mit den Befestigungsvorrichtungen an einer Lochscheibe befestigt werden können, wobei vorzugsweise die Befestigungsvorrichtung jedes Arretierelements in jeweils zwei Löcher der Lochscheibe eingreift.

Eine Befestigung der Arretierelemente am ortsfesten Grundrahmen der Windenergieanlage ist in dieser Fortbildungsform nicht erforderlich, da jedes Arretierelement die Drehung des Rotors in nur eine Richtung verhindert und dies durch die Druckübertragung über den Anschlag der Anlagefläche an eine Gegenfläche am Grundrahmen erfolgt. In die entgegengesetzte Richtung wäre eine Drehung des Rotors bei nur einem Arretierelement möglich. Da die Druckübertragung durch den Anschlag der Anlagefläche des zweiten Arretierelements an eine weitere Gegenfläche am Grundrahmen jedoch eine Drehung die entgegengesetzte Richtung verhindert, ist der Rotor in beide Drehrichtungen fixiert. Als Gegenflächen am Grundrahmen werden vorzugsweise bereits vorhandene Gussrahmen von Fixierbolzen verwendet, da diese geeignete Angriffsflächen für einen Anschlag der Anlagefläche des Arretierelements bieten. Es ist jedoch möglich, auch geeignete andere Gegenflächen am Grundrahmen zu verwenden.

Diese Fortbildungsform erleichtert die Montage/Demontage weiter, da nur eine Befestigung der Arretierelemente an der Hauptwelle, vorzugsweise der Lochscheibe, erforderlich ist und auf eine weitere Befestigung - mit entsprechender Passung - am Grundrahmen verzichtet werden kann.

Alternativ kann die Erfindung dadurch fortgebildet werden, dass jedes der beiden Arretierelemente eine Befestigungsvorrichtung zur Befestigung des Arretierelements an einem ortsfesten Grundrahmen und weiterhin eine Anlagefläche zur Übertragung von Druckkräften auf eine Hauptwelle aufweist.

Eine weitere alternative Fortbildung besteht darin, dass eines der beiden Arretierelemente eine Befestigungsvorrichtung zur Befestigung des Arretierelements an einem ortsfesten Grundrahmen und weiterhin eine Anlagefläche zur Übertragung von Druckkräften auf eine Hauptwelle aufweist und das andere der beiden Arretierelemente eine Befestigungsvorrichtung zur Befestigung des Arretierelements an einem ortsfesten Grundrahmen und weiterhin eine Anlagefläche zur Übertragung von Druckkräften auf eine Hauptwelle aufweist.

Das zuvor beschriebene Prinzip der Befestigung der Arretierelemente an der Hauptwelle und dem Anschlag an den Grundrahmen kann auch umgekehrt angewendet werden mit eine Befestigung der Arretierelemente am Grundrahmen und einem Anschlag an der Hauptwelle. Es können auch beide Prinzipien kombiniert werden, in dem ein Arretierelement nach dem einen und das andere nach dem anderen Prinzip ausgebildet wird. Die Vorteile des Grundprinzips gelten jedoch für alle Ausgestaltungen gleichermaßen. Die unterschiedlichen Varianten können insbesondere beim Einsatz der Rotorarretiervorrichtung für verschiedene Typen von Windenergieanlagen vorteilhaft sein. Beispielsweise bei Windenergieanlagen mit profilierter oder geschlitzter Hauptwelle kann eine entsprechende Anlagefläche zum Eingriff in das Profil bzw. einen Schlitz der Hauptwelle vorgesehen sein.

Die Erfindung ist zudem dadurch charakterisiert, dass jedes der beiden Arretierelemente eine Grundplatte und einen Fixierkeil aufweist, wobei vorzugsweise der Fixierkeil eine Ausnehmung zur Aufnahme eines Verbindungskeils aufweist.

Diese Fortbildungsform stellt eine bevorzugte weitere Vereinfachung der erfindungsgemäßen Rotorarretiervorrichtung dar. Um den Rotor in der exakten 6-Uhr-Position arretieren zu können, kann beispielsweise je nach Montage der Rotornabe auf der Hauptwelle, der Anordnung von Gegenflächen am Grundrahmen und der Angriffspunkte der Befestigungsvorrichtungen an der Hauptwelle eine jeweils sehr unterschiedliche Geometrie der Arretierelemente erforderlich sein. Durch die Ausbildung der Arretierelemente mit einer Grundplatte und einem Fixierkeil wird die Variabilität der Arretierelemente erhöht. Beispielsweise können mehrere, unterschiedlich ausgestaltete Fixierkeile vorgesehen werden, von denen ein auf die jeweilige Situation passender ausgewählt und mit einer Grundplatte zu einem Arretierelement kombiniert wird. Weiterhin können auch mehrere Grundplatten mit unterschiedlichen Abmessungen vorgesehen sein, so dass die Rotorarretiervorrichtung aus einer jeweiligen Kombination von zwei Grundplatten mit zwei Fixierkeilen passend zur jeweiligen Situation ausgewählt bzw. zusammengestellt werden kann.

Weiterhin ist es bevorzugt, dass die Befestigungsvorrichtung an der Grundplatte und die Anlagefläche am Fixierkeil ausgebildet ist. Auf diese Weise kann zunächst die Grundplatte befestigt werden und anschließend der Fixierkeil vorzugsweise mittels eines Verbindungskeils auf der Grundplatte befestigt und/oder ausgerichtet werden. Dazu weist vorzugsweise die Grundplatte einen Anschlagabschnitt auf, der weiterhin vorzugsweise eine Ausnehmung zur Aufnahme eines Verbindungskeils aufweist. Der Fixierkeil wird in dieser Fortbildungsform an den Anschlagabschnitt des Grundrahmens angeordnet und über einen Verbindungskeil, der vorzugsweise sowohl in eine Ausnehmung im Fixierkeil als auch in eine Ausnehmung in der Grundplatte eingreift, mit der Grundplatte verbunden bzw. in Relation zu dieser ausgerichtet.

Die Erfindung kann dadurch fortgebildet werden, dass jedes Arretierelement eine Verbindungsplatte aufweist, das ausgebildet ist, die Grundplatte und den Fixierkeil des ersten und des zweiten Arretierelements jeweils miteinander zu verbinden.

Auf diese Weise kann eine sichere Verbindung zwischen Grundplatte und Fixierkeil sichergestellt werden, die erforderlich ist, um eine definierte Geometrie des Arretierelements und damit die exakte Ausrichtung des Rotorblatts in der 6-Uhr-Postion zu gewährleisten.

Die Erfindung kann dadurch fortgebildet werden, dass das zweite Arretierelement gegenüber dem ersten Arretierelement unterschiedliche Abmessungen aufweist.

Je nach Einsatzbedingungen der mobilen Rotorarretiervorrichtung, beispielsweise je nach Montage der Rotornabe auf der Hauptwelle, der Anordnung von Gegenflächen am Grundrahmen und der Angriffspunkte der Befestigungsvorrichtungen an der Hauptwelle kann es vorteilhaft sein, anstelle eine spiegelbildlichen Ausbildung der beiden Arretierelemente unterschiedliche Geometrien für die beiden Arretierelemente vorzusehen, um eine exakte Ausrichtung eines Rotorblatts in der 6-Uhr-Position zu ermöglichen. Die unterschiedlichen Geometrien können durch eine unterschiedliche Ausgestaltung der Grundplatte, des Fixierkeils, der Verbindungsplatte, des Verbindungskeils oder einer Kombination dieser unterschiedlichen Komponenten erzielt werden.

Ein weiterer Aspekt der Erfindung ist ein Bausatz für eine zuvor beschriebene mobile Rotorarretiervorrichtung zum Arretieren eines Rotors einer Windenergieanlage, der dadurch gekennzeichnet ist, dass der Bausatz zwei oder mehrere unterschiedliche Arretierelemente aufweist mit vorzugsweise zwei oder mehreren unterschiedlichen Grundträgerplatten und/oder zwei oder mehreren unterschiedlichen Fixierkeilen und/oder zwei oder mehreren unterschiedlichen Verbindungsplatten.

Dieser erfindungsgemäße Bausatz hat den Vorteil, dass mit einer relativ geringen Anzahl von Komponenten eine Vielzahl von unterschiedlichen, an die jeweiligen Einsatzbedingungen angepassten Arretierelementen gebildet werden kann und damit eine Vielzahl von Rotorarretiervorrichtungen für unterschiedliche Einsatzzwecke bereitgestellt werden kann. Dies erleichtert den Transport der mobilen Rotorarretiervorrichtung von einer Windenergieanlage zur nächsten.

Die Komponenten, insbesondere die Arretierelemente, des erfindungsgemäßen Bausatzes können entsprechend der zuvor beschriebenen Fortbildungsformen der mobilen Rotorarretiervorrichtung fortgebildet werden. Diese fortgebildeten Bausätze weisen Merkmale auf, die sie insbesondere dafür geeignet machen, erfindungsgemäße Rotorarretiervorrichtungen und ihre Fortbildungen bereitzustellen. Zu den Ausführungsformen, spezifischen Merkmalen, Varianten und Vorteilen der Merkmale dieses Bausatzes und seiner Fortbildungen wird auf die vorangegangene Beschreibung zu den entsprechenden Merkmalen der mobilen Rotorarretiervorrichtung verwiesen.

Ein weiterer Aspekt der Erfindung ist ein Arretierelement für eine mobile Rotorarretiervorrichtung zum Arretieren eines Rotors einer Windenergieanlage, das dadurch gekennzeichnet ist, dass das Arretierelement ausgebildet ist, eine Hauptwelle gegen eine Drehung um ihre Längsachse in einer Richtung zu fixieren.

Das erfindungsgemäße Arretierelement kann dadurch fortgebildet werden, dass es ausgebildet ist, eine Hauptwelle gegen eine Drehung um ihre Längsachse in einer ersten Richtung zu fixieren. Alternativ kann das erfindungsgemäße Arretierelement dadurch fortgebildet werden, dass es ausgebildet ist, eine Hauptwelle gegen eine Drehung um ihre Längsachse in einer zweiten, der ersten entgegengesetzten, Richtung zu fixieren.

Das erfindungsgemäße Arretierelement kann dadurch fortgebildet werden, dass es eine Befestigungsvorrichtung zur Befestigung des Arretierelements an einer Hauptwelle und weiterhin eine Anlagefläche zur Übertragung von Druckkräften auf einen ortsfesten Grundrahmen aufweist.

Alternativ kann das erfindungsgemäße Arretierelement dadurch fortgebildet werden, dass es eine Befestigungsvorrichtung zur Befestigung des Arretierelements an einem ortsfesten Grundrahmen und weiterhin eine Anlagefläche zur Übertragung von Druckkräften auf eine Hauptwelle aufweist.

Das erfindungsgemäße Arretierelement kann dadurch fortgebildet werden, dass es eine Grundplatte und einen Fixierkeil aufweist, wobei vorzugsweise der Fixierkeil eine Ausnehmung zur Aufnahme eines Verbindungskeils aufweist.

Das erfindungsgemäße Arretierelement kann dadurch fortgebildet werden, dass die Grundplatte einen Anschlagabschnitt aufweist, der vorzugsweise eine Ausnehmung zur Aufnahme eines Verbindungskeils aufweist.

Das erfindungsgemäße Arretierelement kann dadurch fortgebildet werden, dass es eine Verbindungsplatte aufweist, das ausgebildet ist, die Grundplatte und den Fixierkeil miteinander zu verbinden.

Diese fortgebildeten Arretierelemente weisen Merkmale auf, die sie insbesondere dafür geeignet machen, mit einer erfindungsgemäßen Rotorarretiervorrichtung und ihren Fortbildungen verwendet zu werden. Zu den Ausführungsformen, spezifischen Merkmalen, Varianten und Vorteilen der Merkmale dieses Arretierelements und seiner Fortbildungen wird auf die vorangegangene Beschreibung zu den entsprechenden Merkmalen Rotorarretiervorrichtung der verwiesen.

Ein weiterer Aspekt der Erfindung ist ein Verfahren zum Arretieren eines Rotors einer Windenergieanlage, umfassend die Schritte: Bereitstellen einer mobilen Rotorarretiervorrichtung, und Arretieren eines Rotors derart, dass er an einer Drehung um eine horizontale Achse gehindert und eine Längsachse eines Rotorblatts in einer vertikalen Ebene fixiert ist, wobei das Verfahren dadurch gekennzeichnet ist, dass der Schritt des Arretierens das Fixieren einer Hauptwelle, auf der ein Rotor drehmomentsteif angeordnet ist, gegen eine Drehung um ihre Längsachse beinhaltet.

Das erfindungsgemäße Verfahren kann dadurch fortgebildet, dass der Schritt des Fixierens einer Hauptwelle die folgenden Schritte umfasst: Fixieren einer Hauptwelle gegen eine Drehung um ihre Längsachse in einer ersten Richtung und Fixieren einer Hauptwelle gegen eine Drehung um ihre Längsachse in einer zweiten, der ersten entgegengesetzten, Richtung.

Das erfindungsgemäße Verfahren kann fortgebildet werden durch die Schritte: Fixieren eines ersten und eines zweiten Arretierelements an einer Hauptwelle und Bereitstellen von jeweils einer Anlagefläche zur Übertragung von Druckkräften auf einen ortsfesten Grundrahmen an jedem der beiden Arretierelemente.

Alternativ kann das erfindungsgemäße Verfahren durch die Schritte fortgebildet werden: Fixieren eines ersten und eines zweiten Arretierelements an einem ortsfesten Grundrahmen und Bereitstellen von jeweils einer Anlagefläche zur Übertragung von Druckkräften auf eine Hauptwelle an jedem der beiden Arretierelemente.

Eine weitere alternative Fortbildung ist gekennzeichnet durch die Schritte: Fixieren eines der beiden Arretierelemente an einer Hauptwelle und Bereitstellen einer Anlagefläche zur Übertragung von Druckkräften auf einen ortsfesten Grundrahmen an diesem Arretierelement und Fixieren des anderen der beiden Arretierelemente an einem ortsfesten Grundrahmen und Bereitstellen einer Anlagefläche zur Übertragung von Druckkräften auf eine Hauptwelle an diesem Arretierelement.

Das erfindungsgemäße Verfahren beinhaltet zudem das Bereitstellen eines Fixierkeils mit einer Anlagefläche.

Das erfindungsgemäße Verfahren kann fortgebildet werden durch dem Schritt: Befestigen und/oder Ausrichten des Fixierkeils an einem Anschlagabschnitt der Grundplatte vorzugsweise mittels eines Verbindungskeils.

Das erfindungsgemäße Verfahren kann fortgebildet werden durch dem Schritt: Verbinden der Grundplatte mit dem Fixierkeil mittels einer Verbindungsplatte.

Das erfindungsgemäße Verfahren kann fortgebildet werden durch dem Schritt: Bereitstellen von zwei Arretierelementen mit unterschiedliche Abmessungen.

Diese fortgebildeten Verfahren weisen Merkmale bzw. Verfahrensschritte auf, die sie insbesondere dafür geeignet machen, mit einer erfindungsgemäßen Rotorarretiervorrichtung und ihren Fortbildungen verwendet zu werden. Zu den Ausführungsformen, spezifischen Merkmalen, Varianten und Vorteilen der Merkmale dieses Verfahrens und der Verfahrensfortbildungen wird auf die vorangegangene Beschreibung zu den entsprechenden Merkmalen Rotorarretiervorrichtung verwiesen.

Bevorzugte Ausführungsformen der Erfindung werden beispielhaft anhand der beiliegenden Figuren beschrieben. Es zeigen:
- Fig. 1:: eine erste Ausführungsform einer erfindungsgemäßen Rotorarretiervorrichtung in montiertem Zustand,
- Fig. 2a:: eine zweite Ausführungsform einer erfindungsgemäßen Rotorarretiervorrichtung in montiertem Zustand,
- Fig. 2b:: das Detail A aus Fig. 2a,
- Fig. 2c:: die Ansicht B gemäß Fig. 2a,
- Fig. 3:: eine dritte Ausführungsform einer erfindungsgemäßen Rotorarretiervorrichtung in montiertem Zustand,
- Fig. 4a-j:: die Grundplatte des ersten Arretierelements der in Fig. 1 dargestellten Ausführungsform in verschiedenen Ansichten und Schnitten,
- Fig. 5a-j:: die Grundplatte des zweiten Arretierelements der in Fig. 1 dargestellten Ausführungsform in verschiedenen Ansichten und Schnitten,
- Fig. 6a-j:: die Grundplatte des zweiten Arretierelements der in Fig. 2 dargestellten Ausführungsform in verschiedenen Ansichten und Schnitten,
- Fig. 7a-j:: die Grundplatte des ersten Arretierelements der in Fig. 3 dargestellten Ausführungsform in verschiedenen Ansichten und Schnitten,
- Fig. 8a-j:: die Grundplatte des zweiten Arretierelements der in Fig. 3 dargestellten Ausführungsform in verschiedenen Ansichten und Schnitten,
- Fig. 9a-d:: den Fixierkeil des ersten Arretierelements der in Fig. 1 dargestellten Ausführungsform in verschiedenen Ansichten und Schnitten,
- Fig. 10a-d:: den Fixierkeil des zweiten Arretierelements der in Fig. 1 dargestellten Ausführungsform in verschiedenen Ansichten und Schnitten,
- Fig. 11 a-d:: den Fixierkeil des zweiten Arretierelements der in Fig. 2 dargestellten Ausführungsform in verschiedenen Ansichten und Schnitten,
- Fig. 12a-d:: den Fixierkeil des ersten Arretierelements der in Fig. 3 dargestellten Ausführungsform in verschiedenen Ansichten und Schnitten,
- Fig. 13a-d:: den Fixierkeil des zweiten Arretierelements der in Fig. 3 dargestellten Ausführungsform in verschiedenen Ansichten und Schnitten,
- Fig. 14a-c:: die Verbindungsplatte des ersten Arretierelements der in Fig. 1 dargestellten Ausführungsform in verschiedenen Ansichten und Schnitten,
- Fig. 15a-c:: die Verbindungsplatte des zweiten Arretierelements der in Fig. 1 dargestellten Ausführungsform in verschiedenen Ansichten und Schnitten,
- Fig. 16a-c:: die Verbindungsplatte des zweiten Arretierelements der in Fig. 2 dargestellten Ausführungsform in verschiedenen Ansichten und Schnitten,
- Fig. 17a-c:: die Verbindungsplatte des ersten Arretierelements der in Fig. 3 dargestellten Ausführungsform in verschiedenen Ansichten und Schnitten,
- Fig. 18a-c:: die Verbindungsplatte des zweiten Arretierelements der in Fig. 3 dargestellten Ausführungsform in verschiedenen Ansichten und Schnitten,
- Fig.19a-c:: eine für alle gezeigten Ausführungsformen einsetzbare Mutter in Draufsicht, Schnitt und dreidimensionaler Vorder- und Rückansicht und
- Fig. 20a-c:: einen für alle gezeigten Ausführungsformen einsetzbaren Verbindungskeil in Draufsicht, Seitenansicht und dreidimensionaler Ansicht.

In den Zeichnungen sind Elemente mit gleichen oder im Wesentlichen gleichen Funktionen mit den gleichen Bezugszeichen versehen. Besonderheiten der hier beispielhaft dargestellten drei Ausführungsformen sind jeweils mit einem dem Bezugszeichen nachgestellten a, b oder c gekennzeichnet. Allgemein beschriebene Eigenschaften, Merkmale und Vorteile gelten für alle der drei beispielhaften Ausführungsformen.

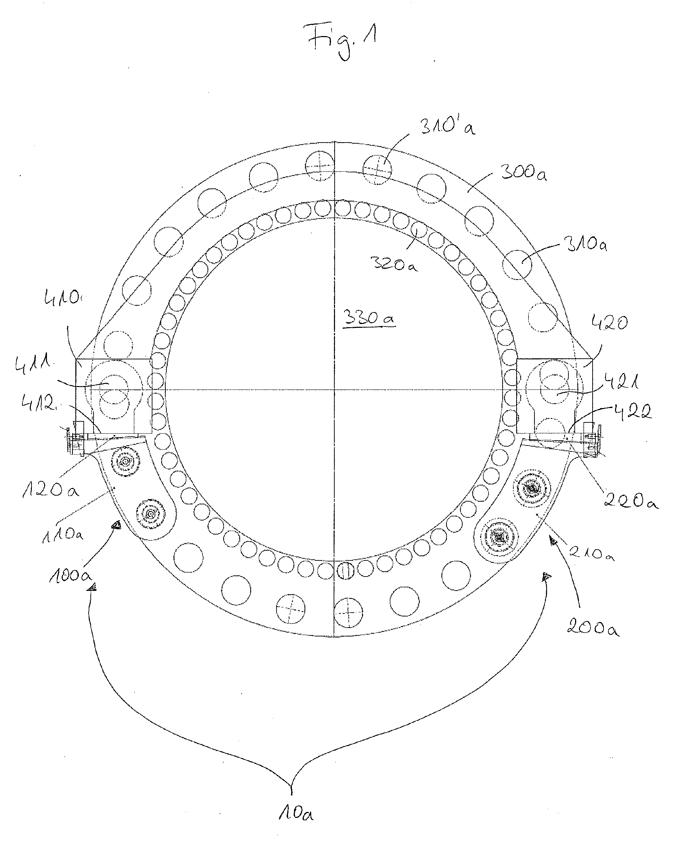

In den Figuren 1 bis 3 ist jeweils eine kreisförmige Lochscheibe 300 a, b, c dargestellt, die über Ausnehmungen 320 a, b, c drehmomentsteif mit einer Hauptwelle 330 a, b, c einer Windenergieanlage verbunden ist. Über Spannschrauben ist die Hauptwelle 330 a, b, c weiterhin drehmomentsteif mit der Nabe des Rotors (nicht dargestellt) verbunden. Hauptwelle 330 a, b, c, Lochscheibe 300 a, b, c und Rotor bilden somit eine drehmomentsteif verbundene Einheit. Die Arretierung einer dieser Komponenten arretiert somit auch die jeweils anderen beiden Komponenten.

Die Lochscheibe 300 a, b, c weist weiterhin 24 Löcher 310 a, b, c auf, die im Abstand von jeweils 15° versetzt entlang der Lochscheibe 300 a, b, c angeordnet sind und zur Arretierung von Lochscheibe 300 a, b, c, Welle 330 a, b, c und Rotor dienen.

Die Hauptwelle 330 a, b, c ist drehbar auf einem ortsfesten Grundrahmen (nicht dargestellt) gelagert. An diesem Grundrahmen sind weiterhin herstellerseitig fest montierte und damit ebenfalls ortsfeste Arretierbolzen 411, 421 in einem fest mit dem Grundrahmen verbundenen Gussrahmen 410, 420 parallel zur Hauptwelle 330 a, b, c verschieblich angeordnet. Durch Ausfahren der Arretierbolzen 411, 421 aus dem Gussrahmen 410, 420 und dem Eingreifen der Arretierbolzen 411, 421 in Ausnehmungen 310 a, b, c der Lochscheibe 300 a, b, c kann die Lochscheibe 300 a, b, c und damit die mit ihr drehsteif verbundene Hauptwelle 330 a, b, c gegenüber dem Grundrahmen arretiert werden. Je nach Montage des Rotors an der Lochscheibe 300 a, b, c und weiterhin der Montage der Lochscheibe 300 a, b, c auf der Hauptwelle 330 a, b, c über die Ausnehmungen 320 a, b, c kann es jedoch vorkommen, dass eine Arretierung eines Rotorblatts exakt in der 6-Uhr-Position, d.h. mit der Längsachse des Rotorblatts in einer vertikalen Ebene, die die Längsachse der Hauptwelle 330 a, b, c und die Längsachse des Windenergieanlagenturms umfasst, nicht möglich ist, sondern das Rotorblatt stattdessen bei Arretierung eine Auslenkung gegenüber dieser Ebene aufweist, die in den hier gezeigten Beispielen zwischen 0 und 15° betragen kann. Für eine exakte Arretierung des Rotors derart, dass eines der Rotorblätter in der exakten 6-Uhr-Position arretiert wird, können die herstellerseitig vorgesehenen Arretierbolzen 411, 421 daher in solchen Fällen nicht verwendet werden.

Mittels die hier dargestellten drei beispielhaften Ausführungsformen 10 a, b, c der erfindungsgemäßen mobilen Rotorarretiervorrichtung wird eine solche exakte Positionierung eines Rotorblatts in der 6-Uhr-Position jedoch in besonders einfacher und vorteilhafter Weise ermöglicht. Die erfindungsgemäße mobile Rotorarretiervorrichtung 10 a, b, c weist jeweils ein erstes Arretierelement 100 a, b, c und ein zweites Arretierelement 200 a, b, c auf. Das erste Arretierelement 100 a, b, c ist in den in den Figuren 1, 2a und 3 gezeigten Darstellung links angeordnet und das zweite Arretierelement 200 a, b, c rechts. Beide Arretierelemente 100 a, b, c, 200 a, b, c sind über Befestigungsvorrichtungen 111 a, b, c, 113 a, b, c, 211 a, b, c, 213 a, b, c mit Muttern 150 lösbar an der Lochscheibe 310 a, b, c und damit an der Hauptwelle 330 a, b, c befestigt. Beide Arretierelemente 100 a, b, c, 200 a, b, c, weisen weiterhin jeweils eine an dem jeweiligen Fixierkeil 120, 220 ausgebildete Anlagefläche 121 a, b, c, 221 a, b, c auf, über die sie an Gegenflächen 412, 422 der beiden Gussrahmen 410, 420 der Arretierbolzen 411, 421 angreifen.

Der Arretiermechanismus der erfindungsgemäßen Rotorarretiervorrichtung 10 a, b, c ist somit folgendermaßen realisiert: Das erste Arretierelement 100 a, b, c verhindert durch seine Befestigung an der Lochscheibe 300 a, b, c und damit an der Hauptwelle 330 a, b, c einerseits und dem Anschlag der Anlagefläche 121 a, b, c an der Gegenfläche 412 des Gussrahmens 410 und damit am Grundrahmen andererseits, eine Drehung der Lochscheibe 300 a, b, c und damit der Hauptwelle 330 a, b, c im Uhrzeigersinn. Eine Drehung entgegen den Uhrzeigersinn wird über das zweite Arretierelement 200 a, b, c verhindert, da auch dieses Arretierelement 200 a, b, c an der Lochscheibe 300 a, b, c und damit der Hauptwelle 330 a, b, c befestigt ist und eine Drehung entgegen den Uhrzeigersinn durch den Anschlag der Auflagefläche 221 a, b, c an die Gegenfläche 422 des Gussrahmens 420 verhindert wird und damit auch der drehmomentsteif an der Lochscheibe 300 a, b, c und damit auch an der Welle 330 a, b, c befestigte Rotor an einer Drehung gegenüber dem Grundrahmen in beide Richtungen gehindert wird.

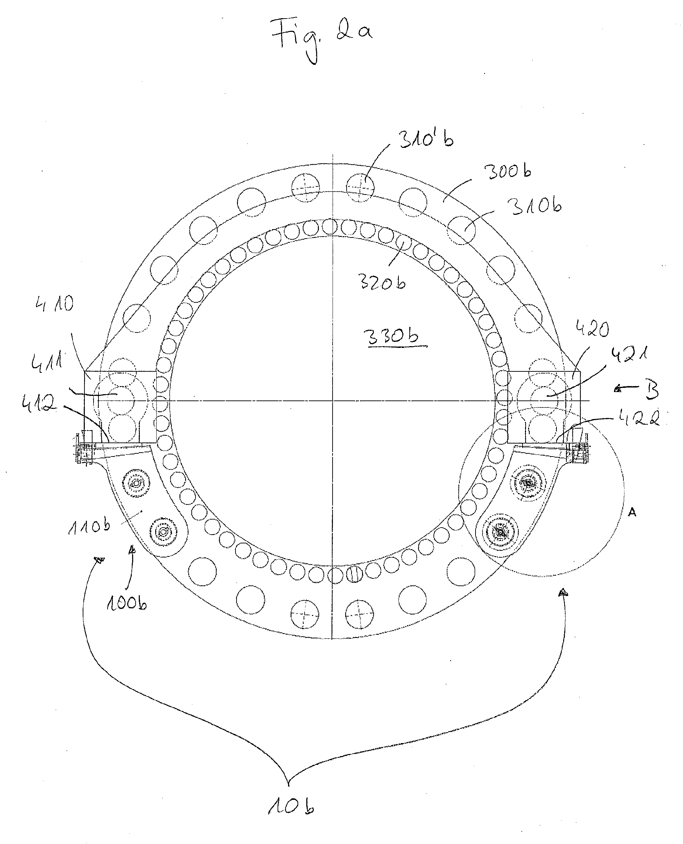

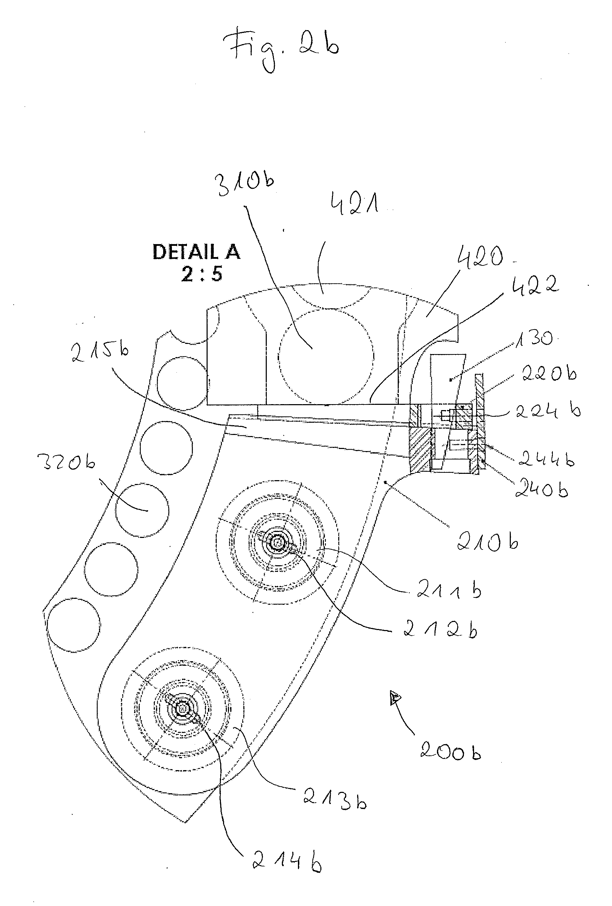

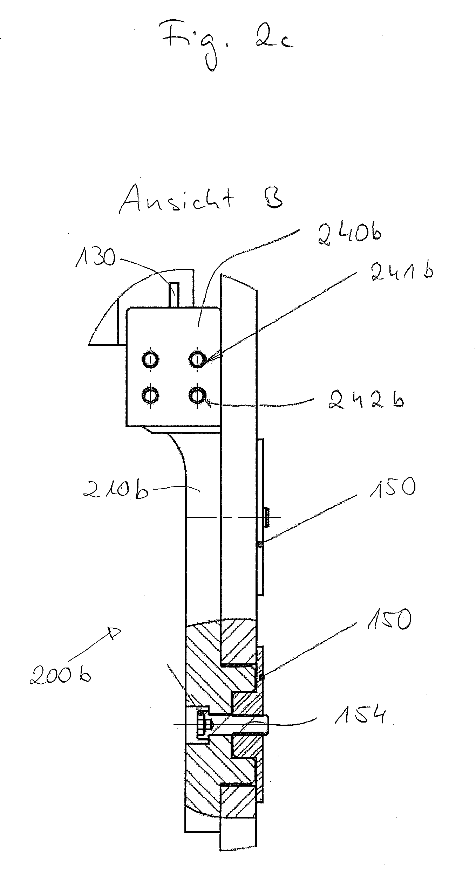

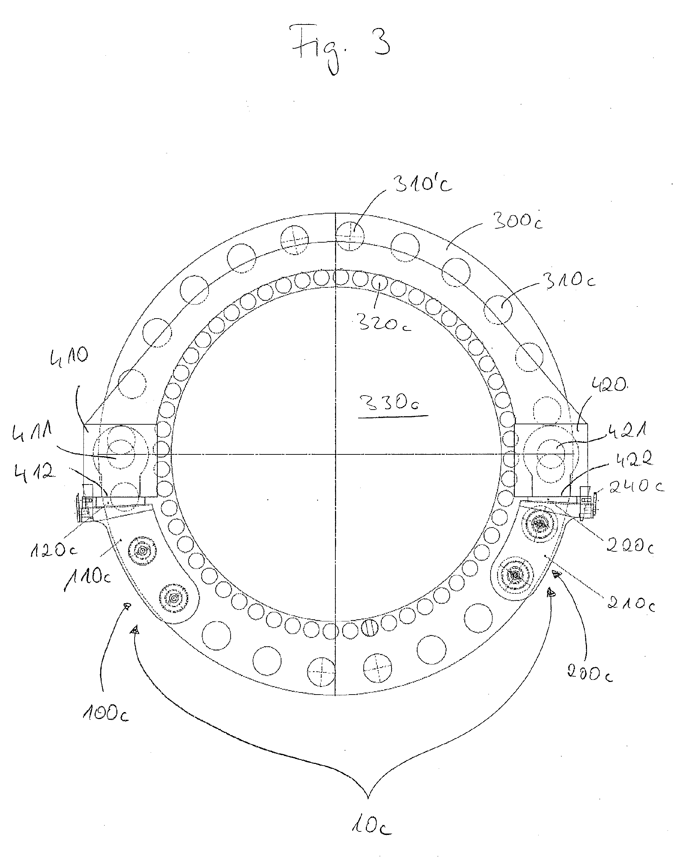

Wie im Vergleich der Figuren 1 bis 3 sowie der zugehörigen weiteren Figuren deutlich wird, sind die Abmessungen der ersten und zweiten Arretierelemente 100 a, b, c, 200 a, b, c in den drei beispielhaften Ausführungsvarianten 10 a, b, c unterschiedlich und so gewählt, dass der Mittelpunkt einer Ausnehmung 310' a, b, c der Lochscheibe 300 a, b, c gegenüber der Vertikalen eine Auslenkung im Uhrzeigersinn von 3,75° (Fig. 1), 7,5° (Fig. 2) oder 11,25° bzw. 11,75° (Fig. 3) hat. Die hier genannten Gradzahlen sind für bestimmte Einsatzgebiete (beispielsweise Windenergieanlagentyp und Montagezustand) bevorzugt. Es können je nach Einsatzgebiet auch andere, weitere Gradzahlen bevorzugt sein. Vorzugsweise sind die Abmessungen so gewählt, dass die Gradzahlen, die einer bestimmten Stellung der Lochscheibe 300 a, b, c und damit des daran drehmomentsteif befestigten Rotors entsprechen, derart auf die jeweilige Windenergieanlage bzw. einen bestimmten Typ von Windenergieanlagen abgestimmt sind, dass eine entsprechende Auslenkung der Lochscheibe 300 a, b, c zu einer Arretierung des Rotors mit einem Rotorblatt exakt in der 6-Uhr-Position führt.

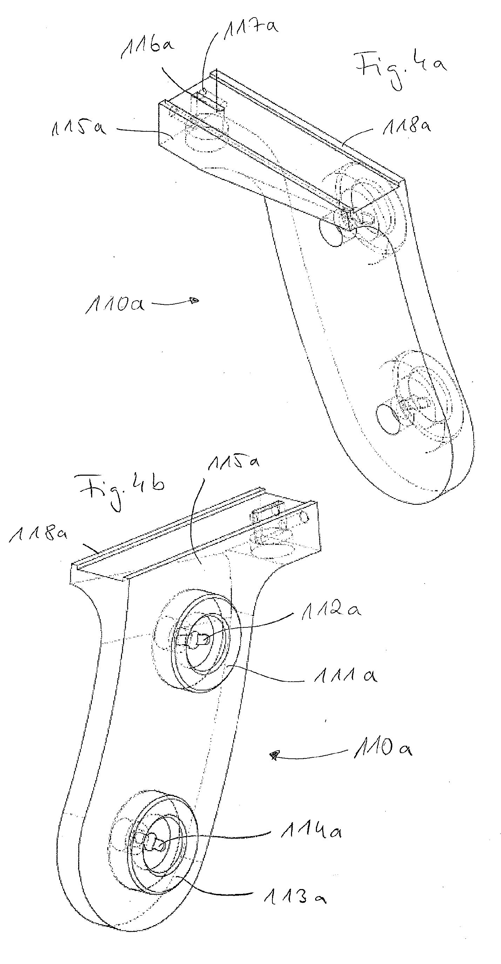

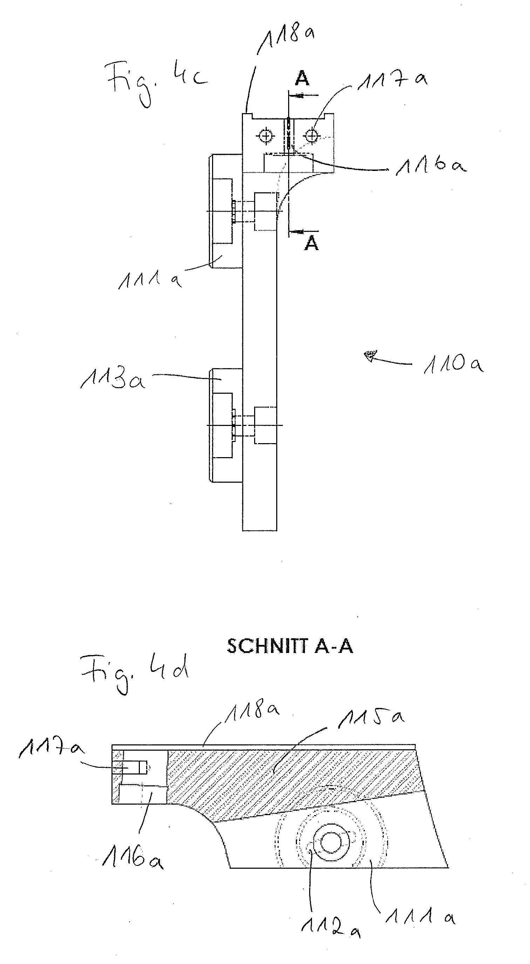

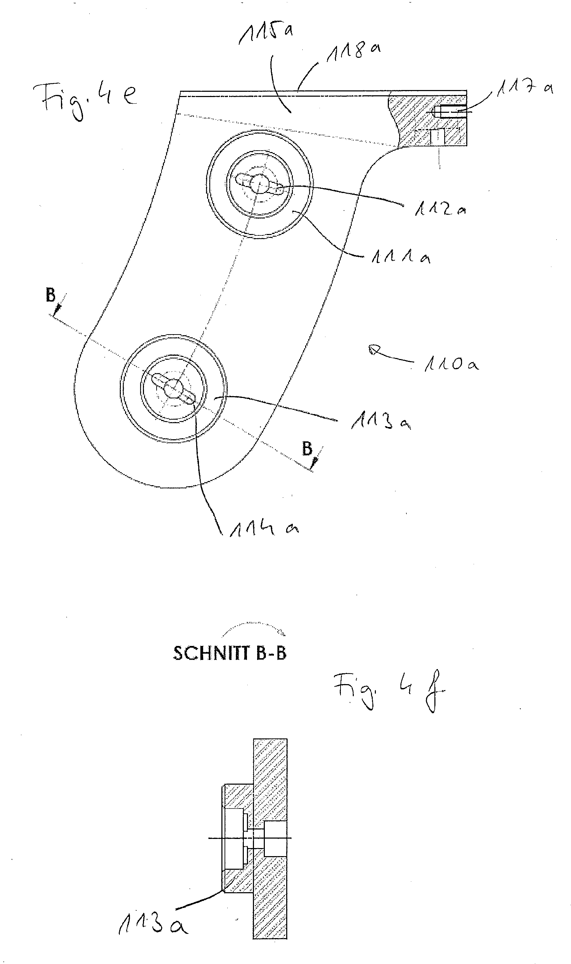

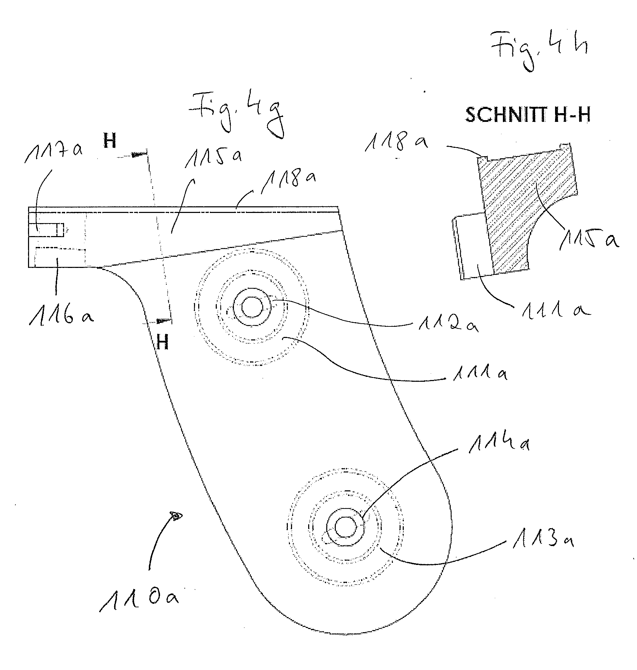

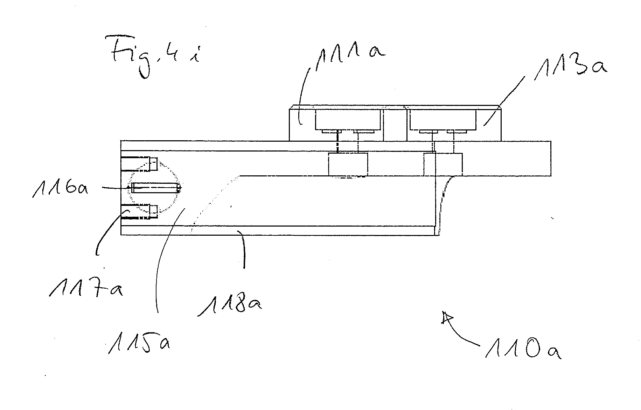

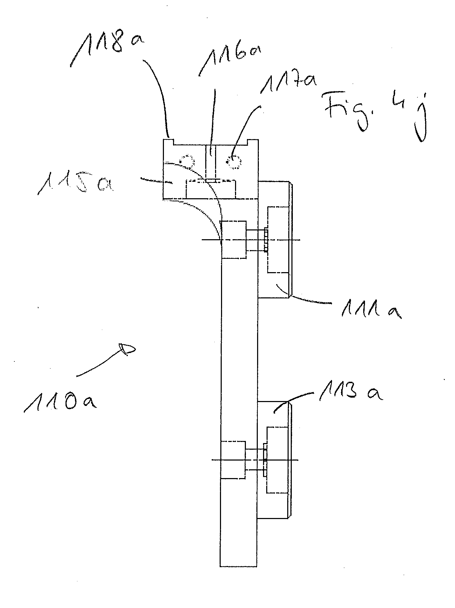

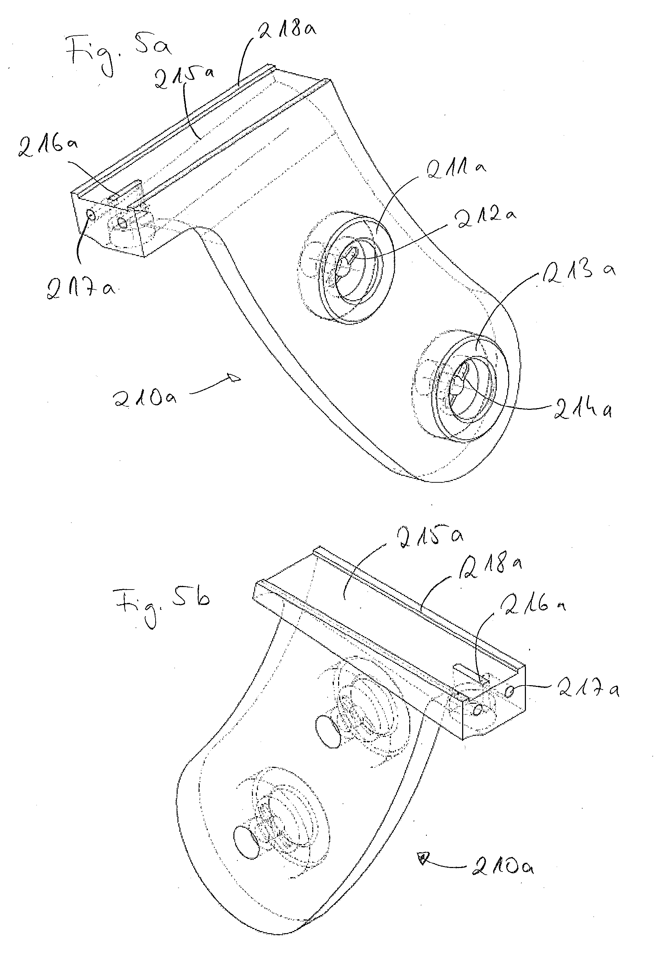

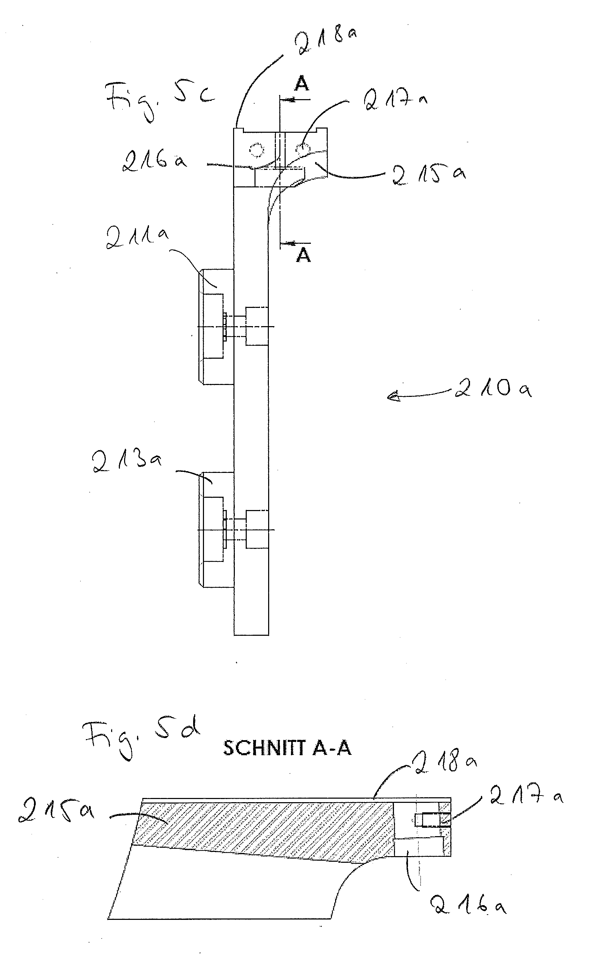

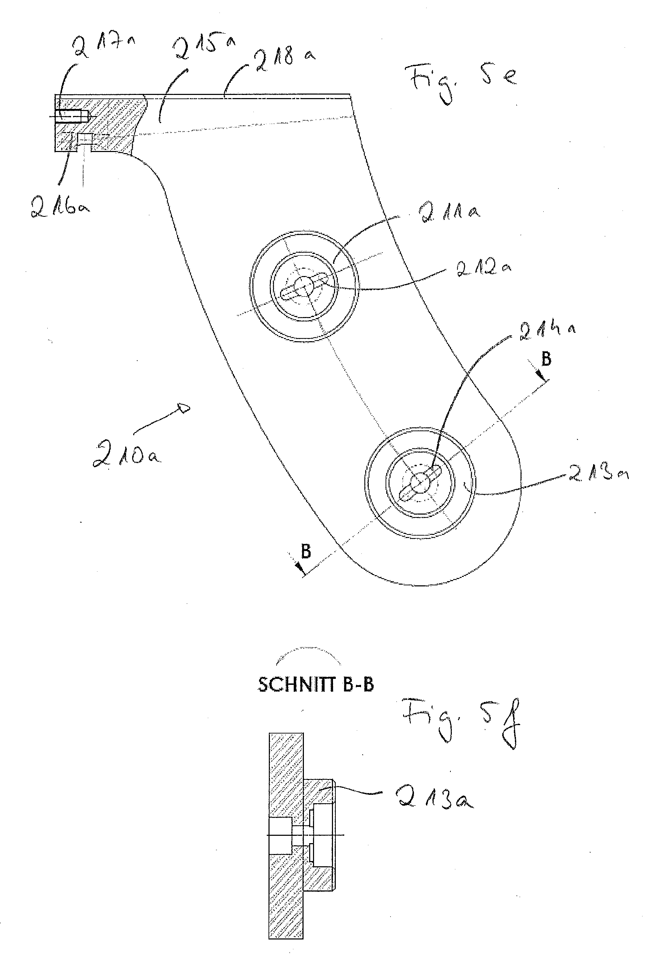

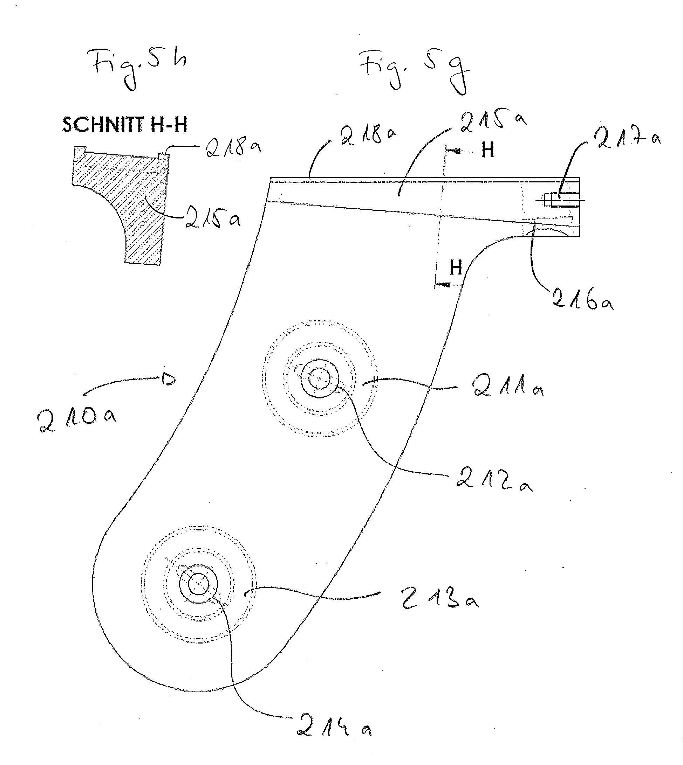

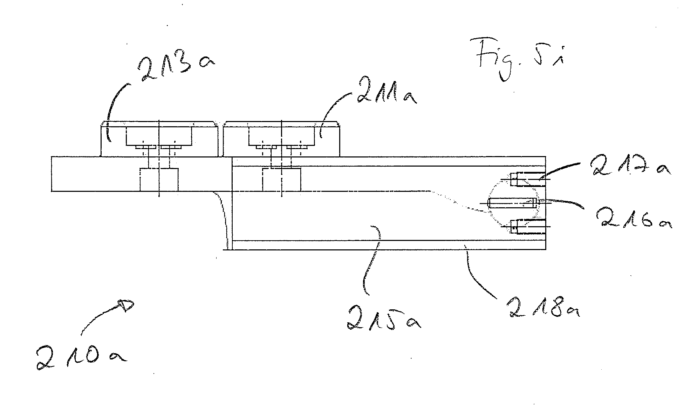

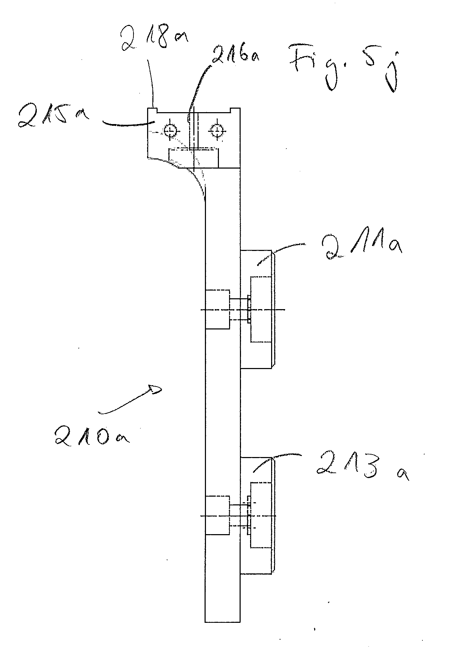

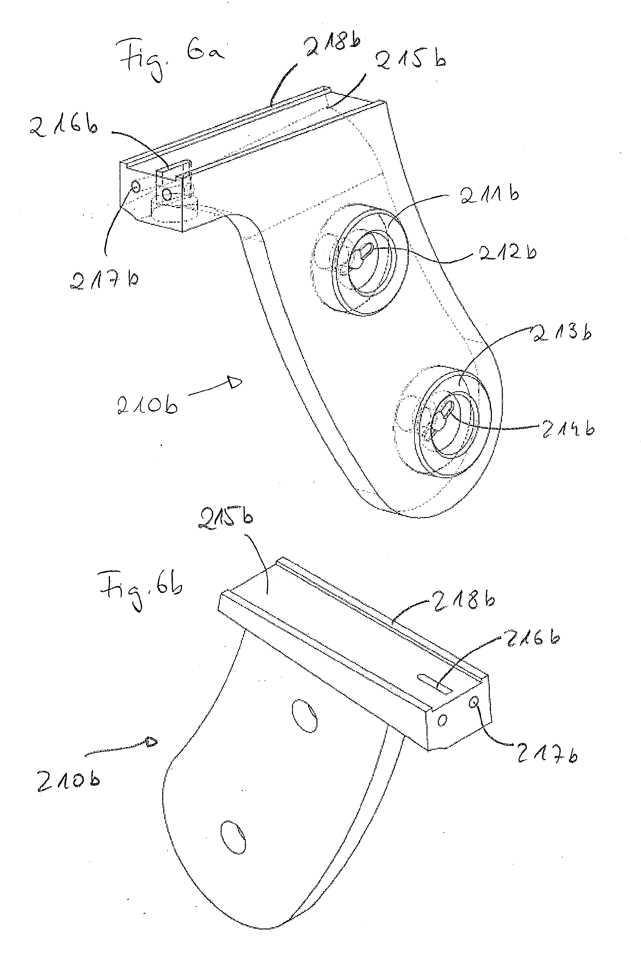

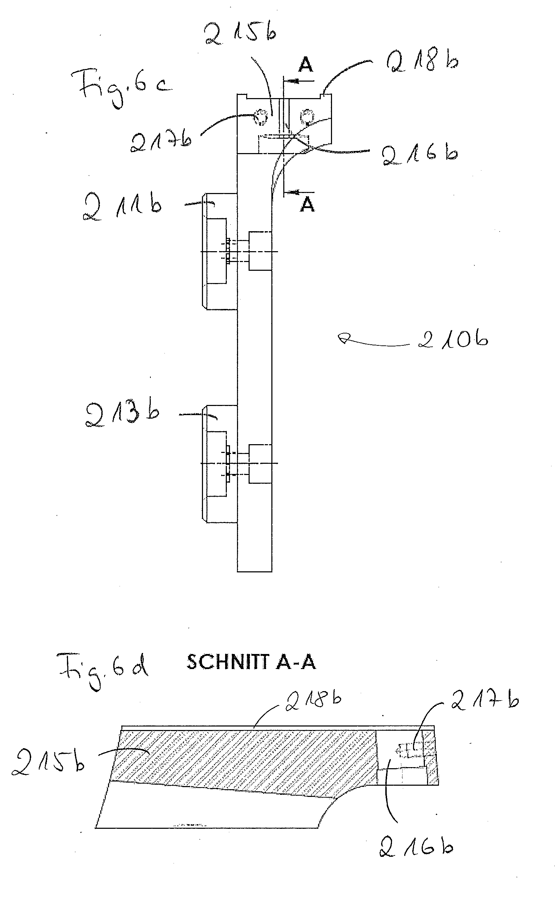

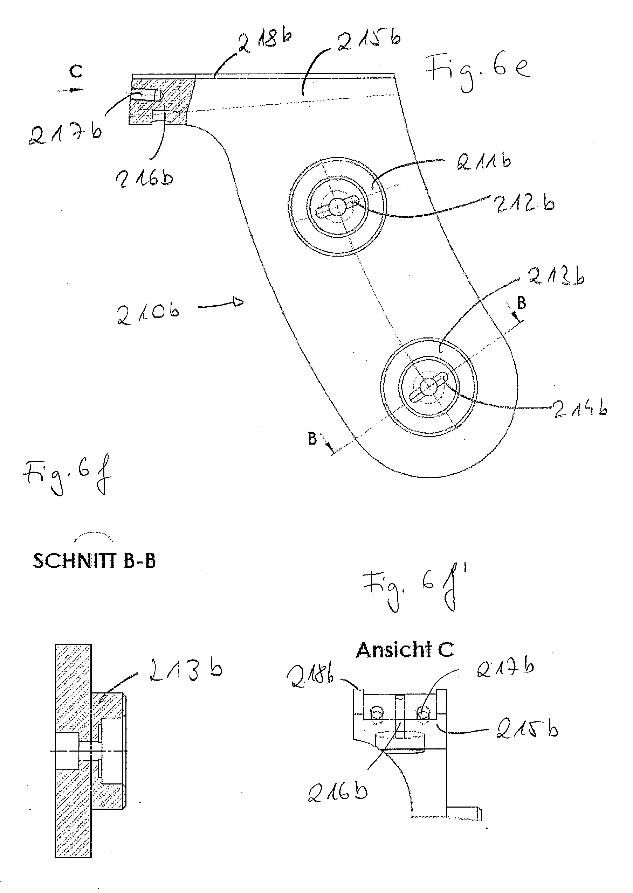

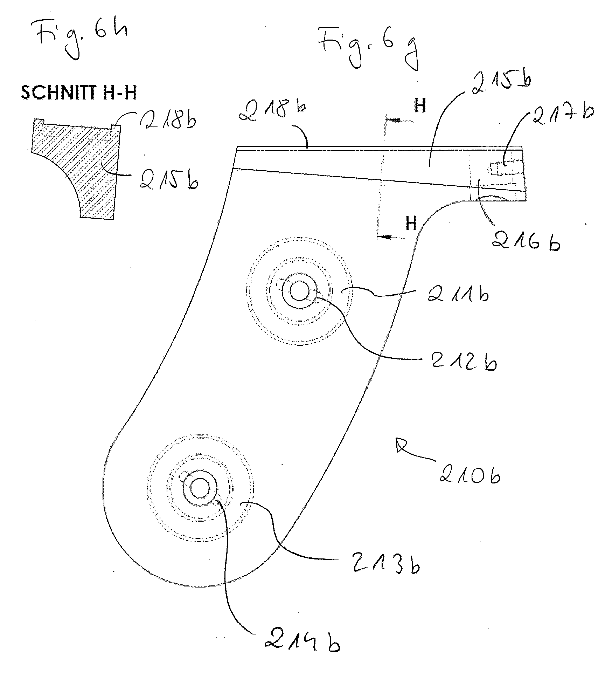

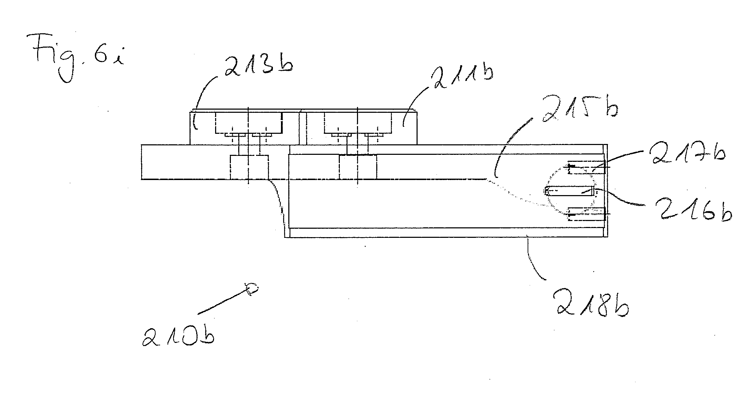

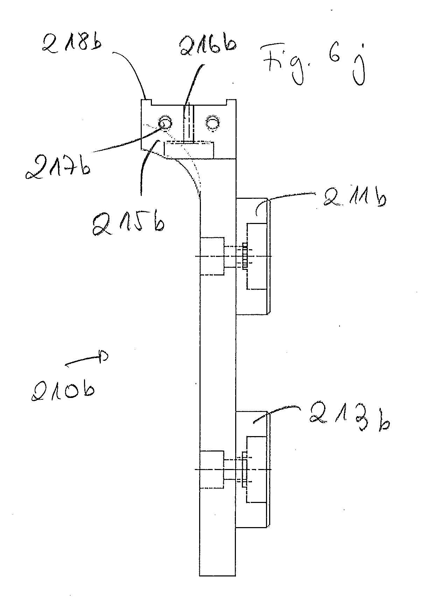

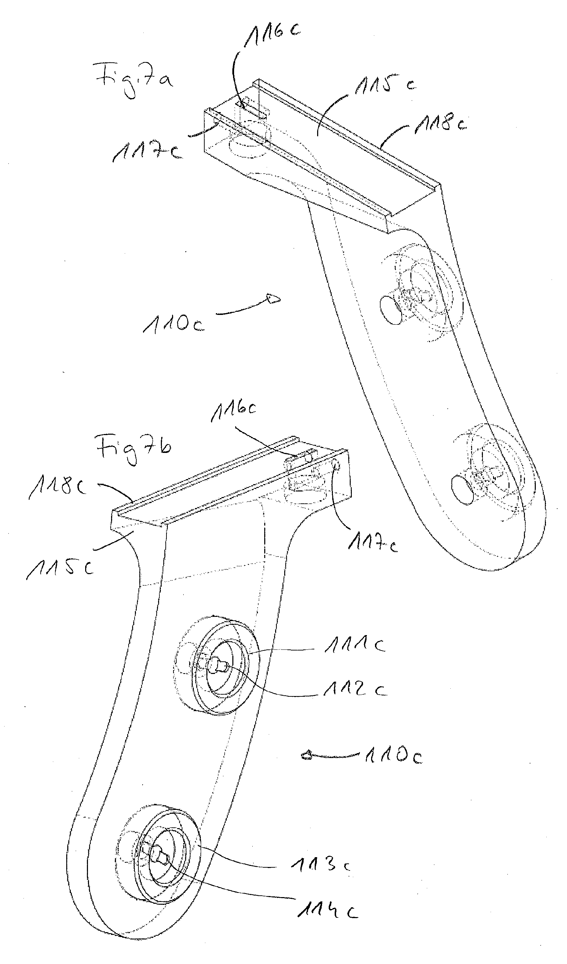

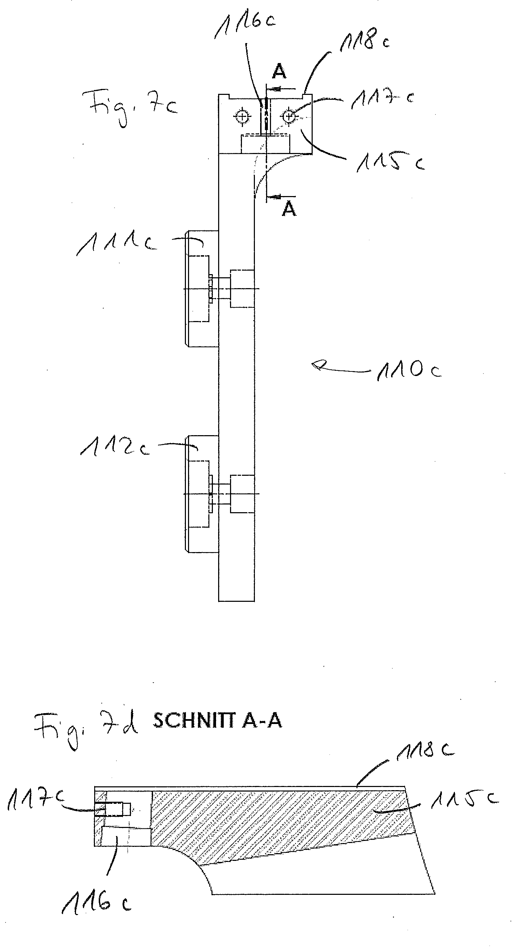

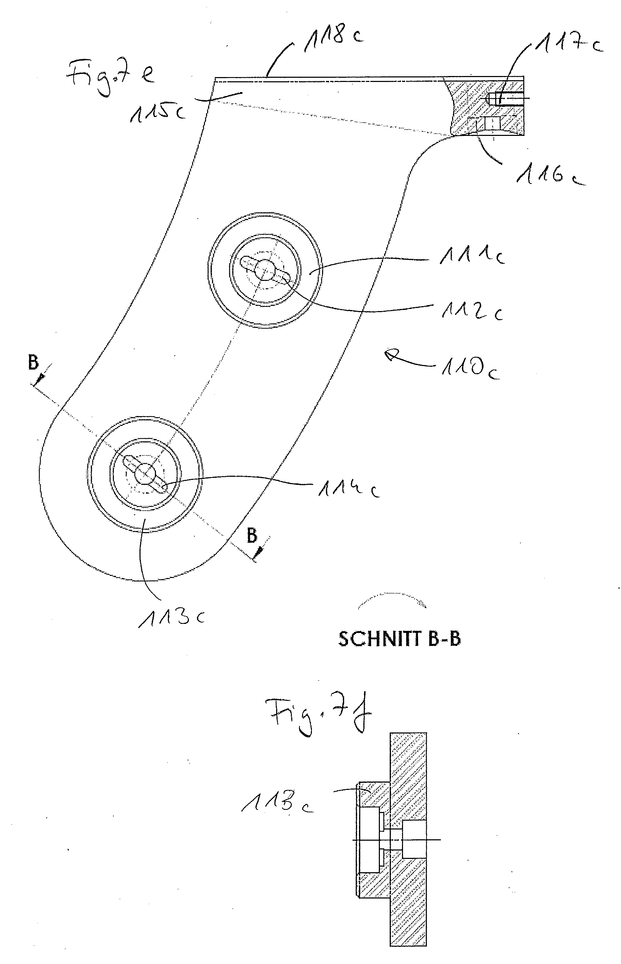

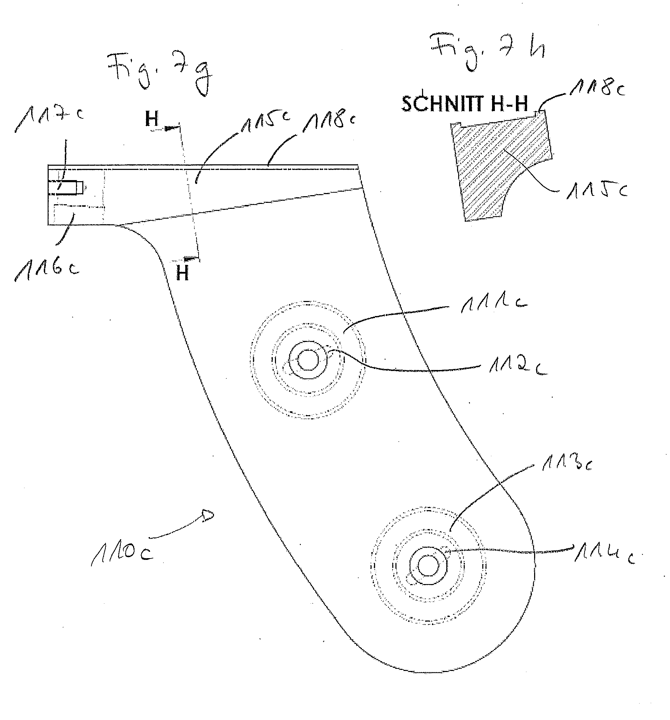

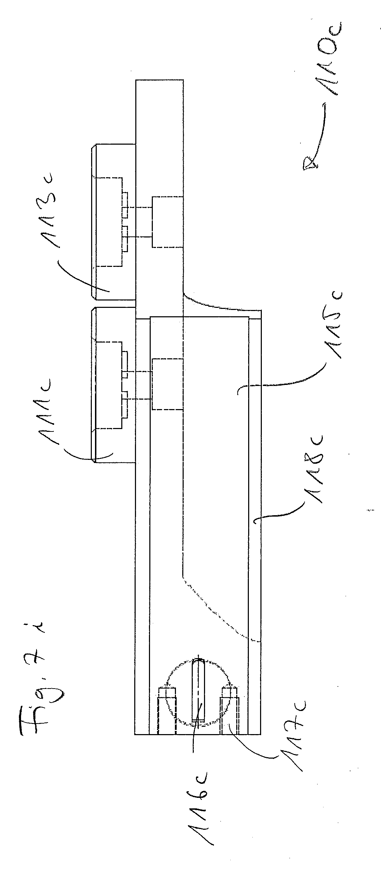

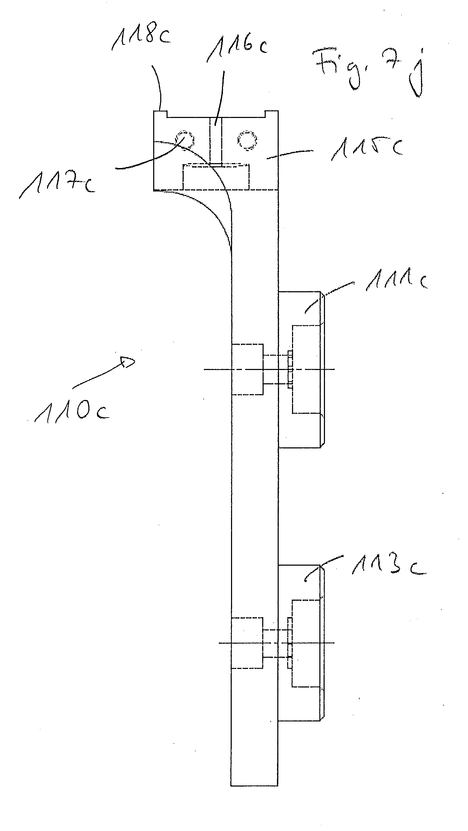

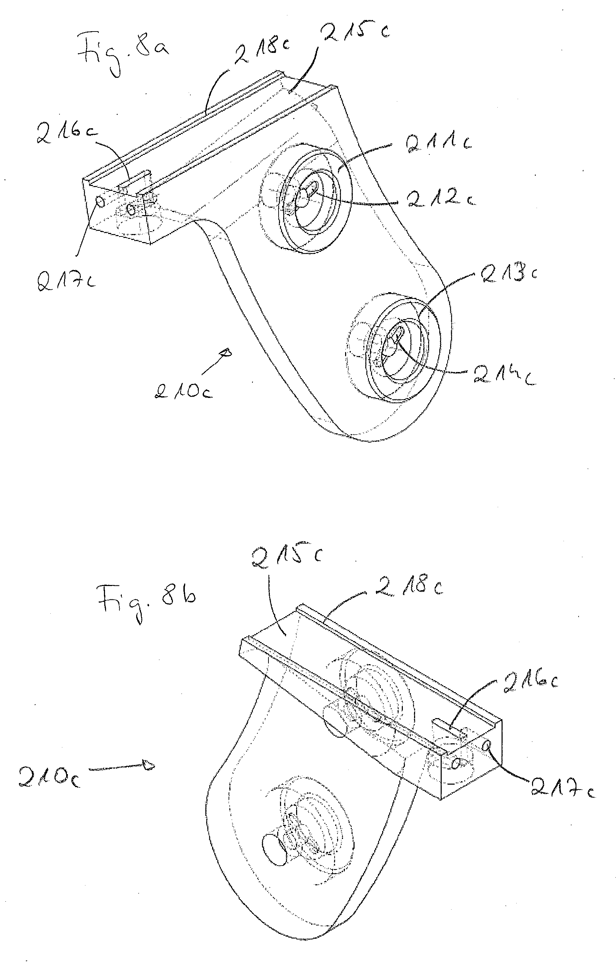

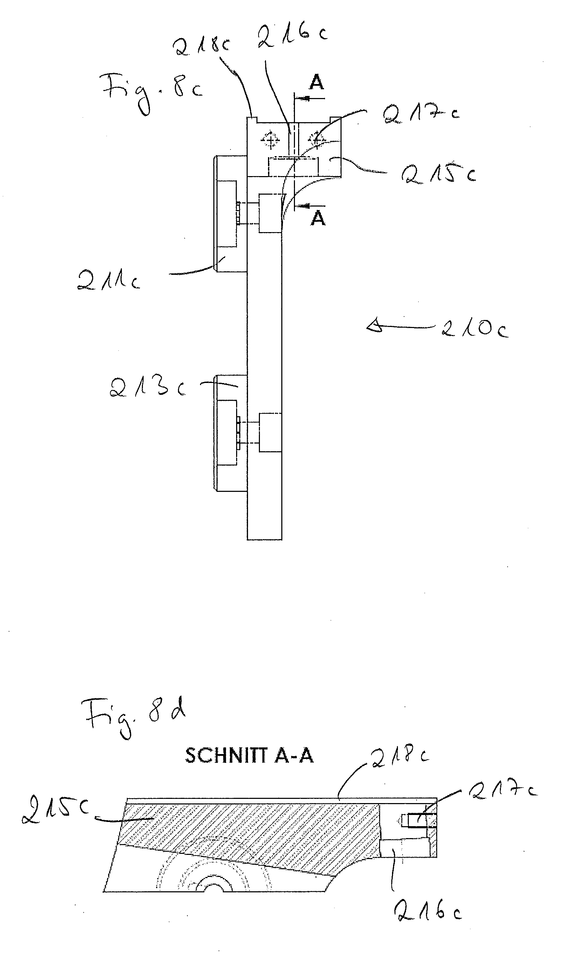

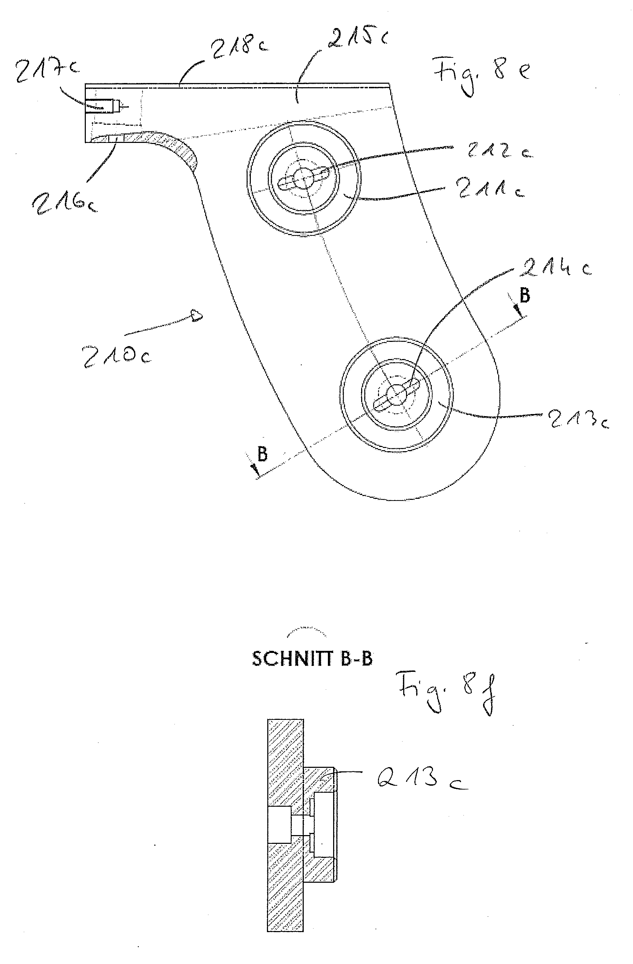

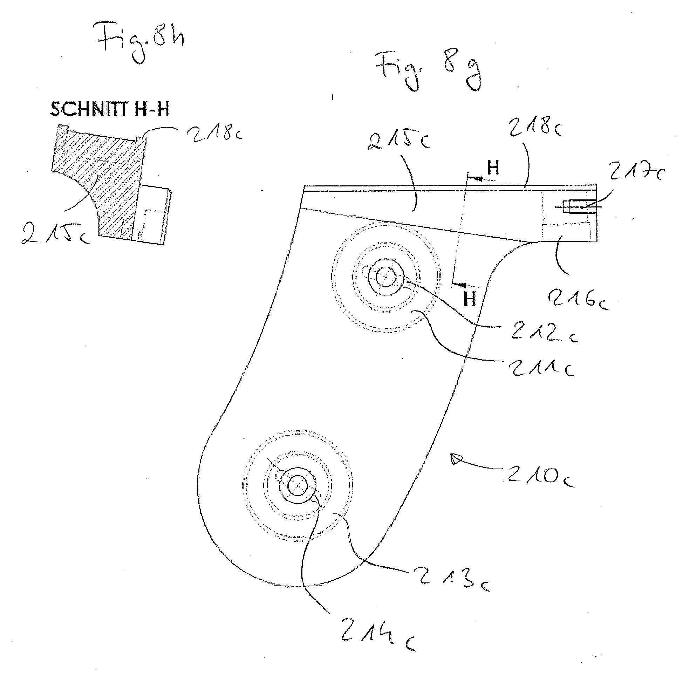

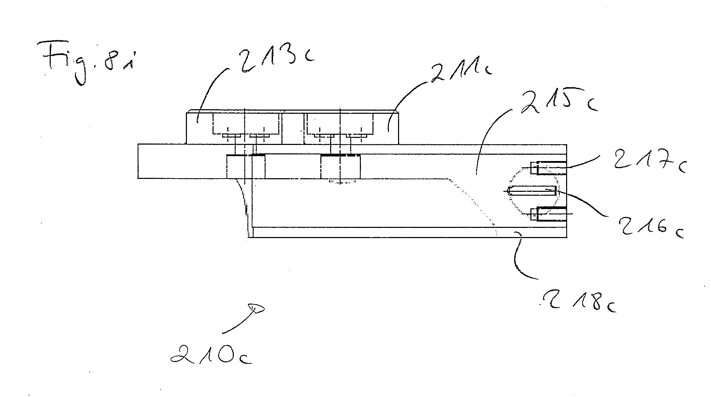

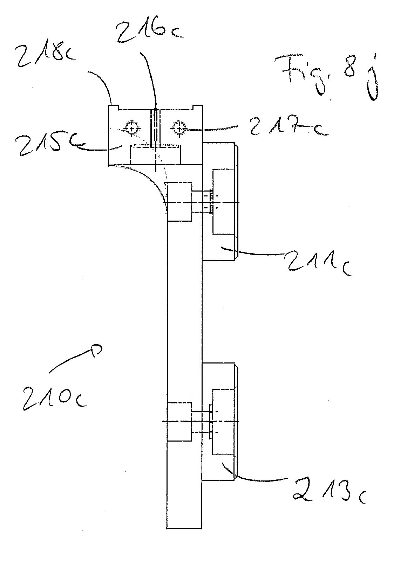

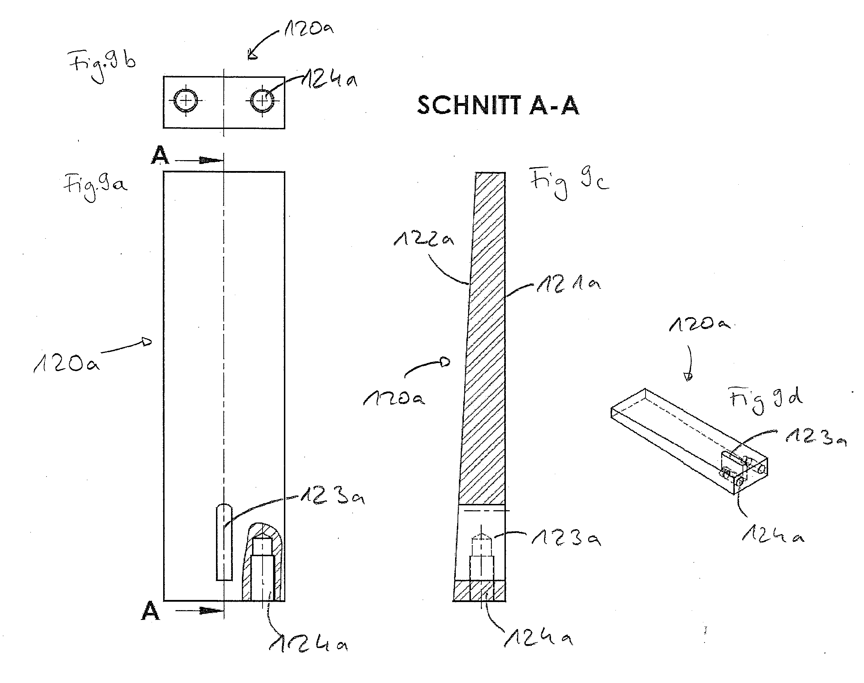

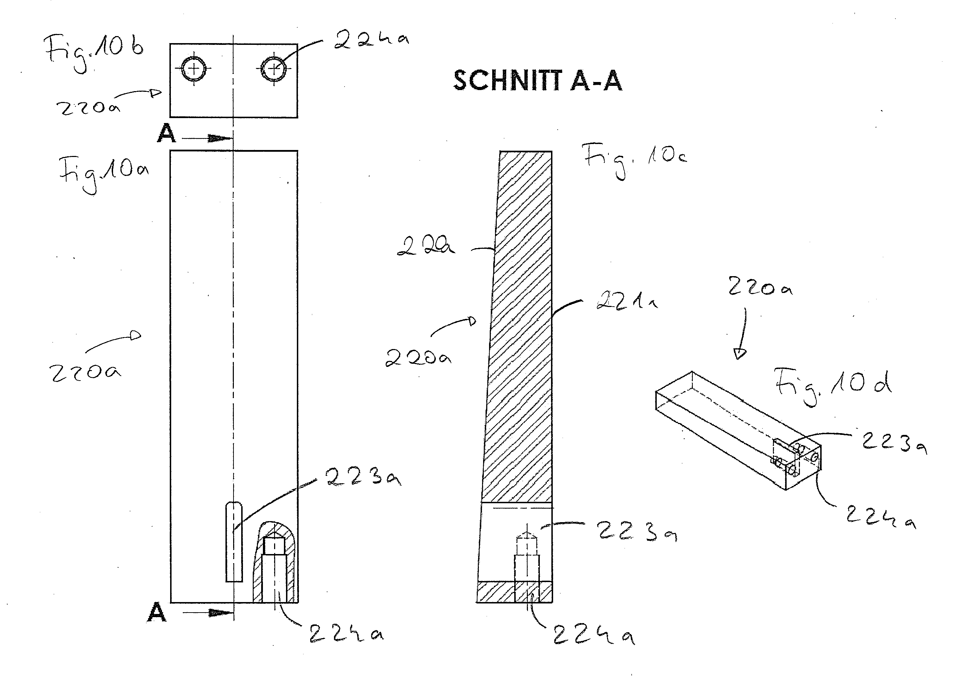

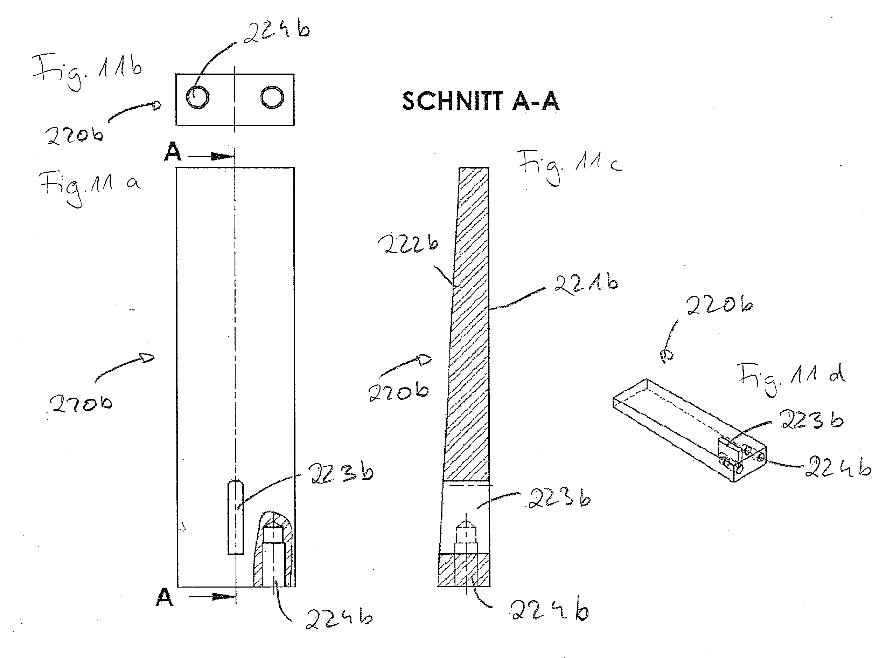

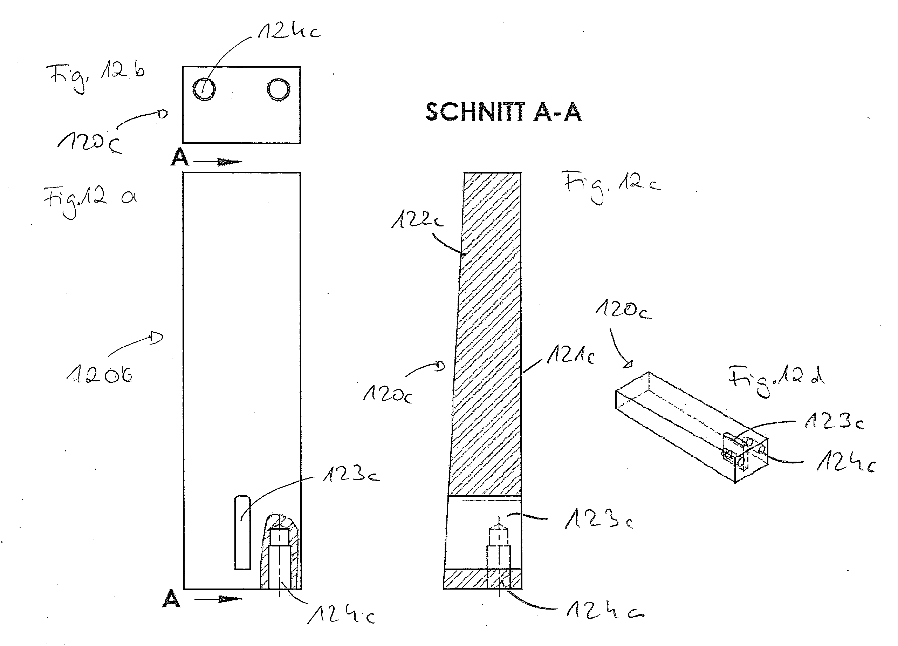

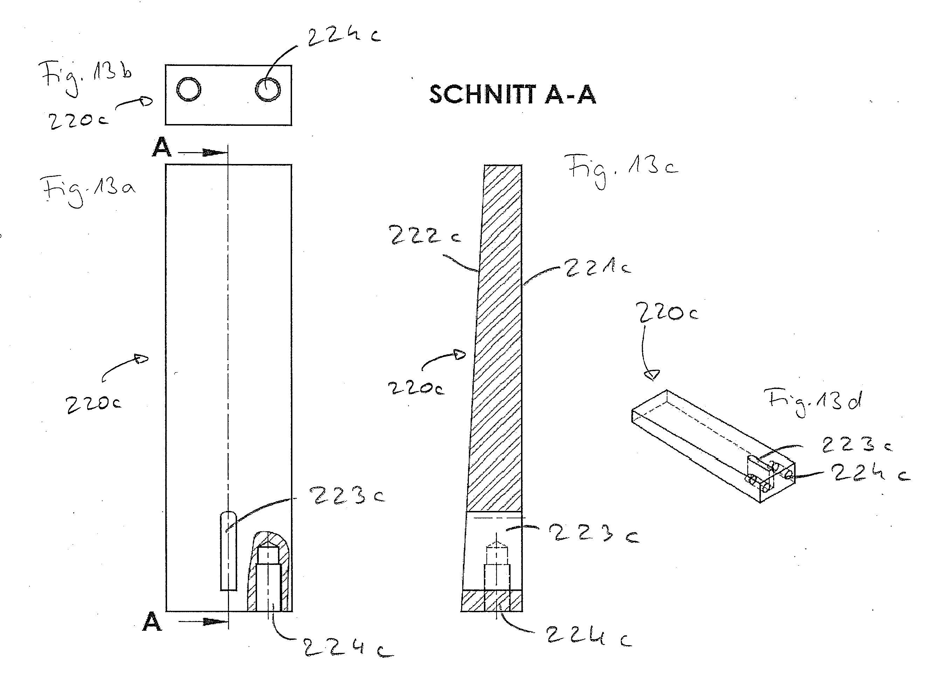

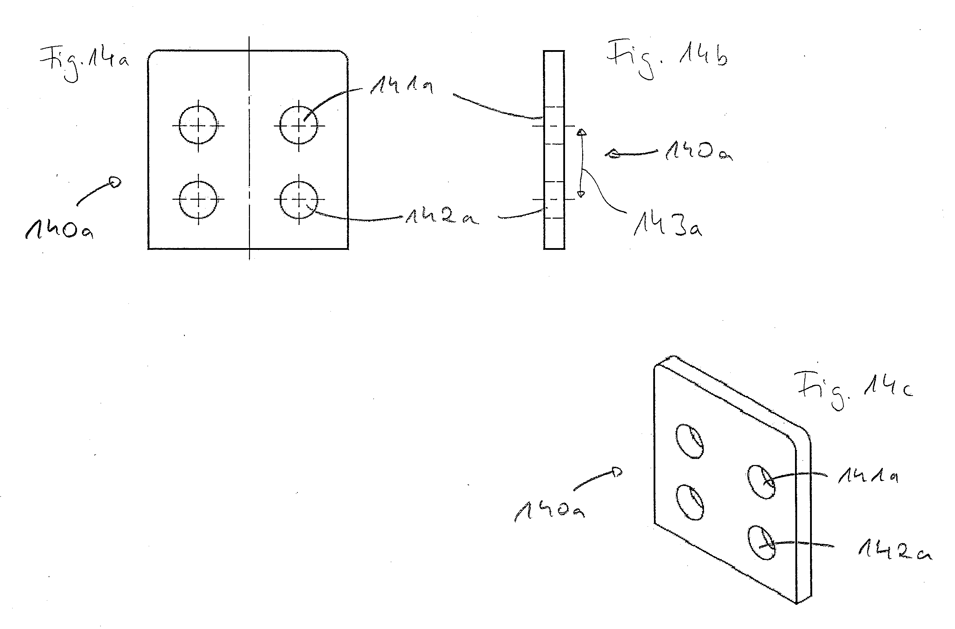

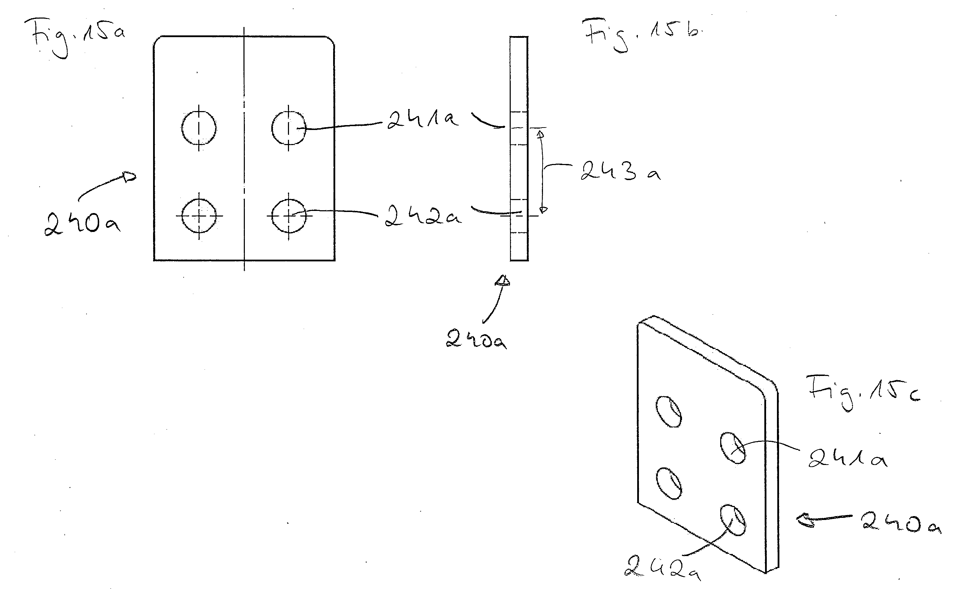

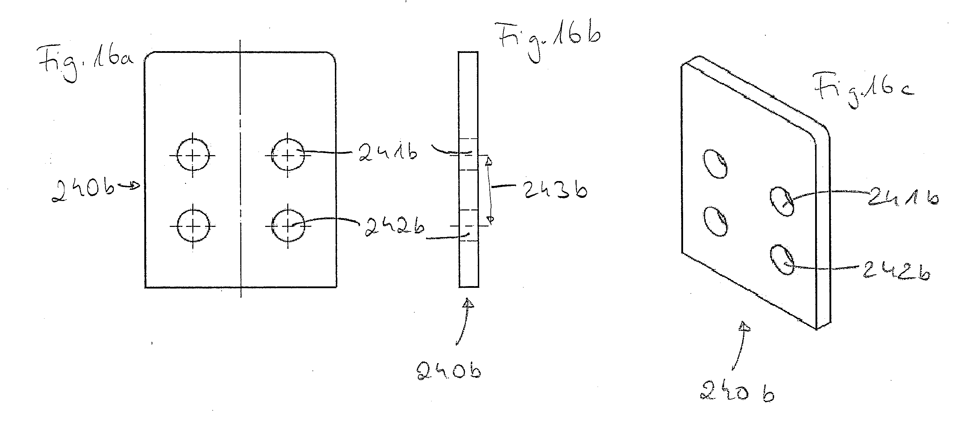

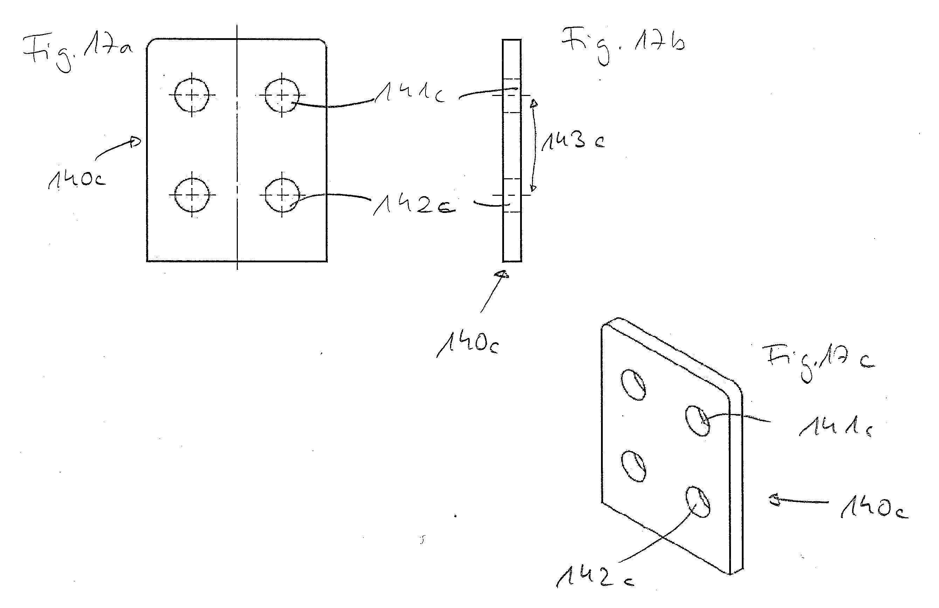

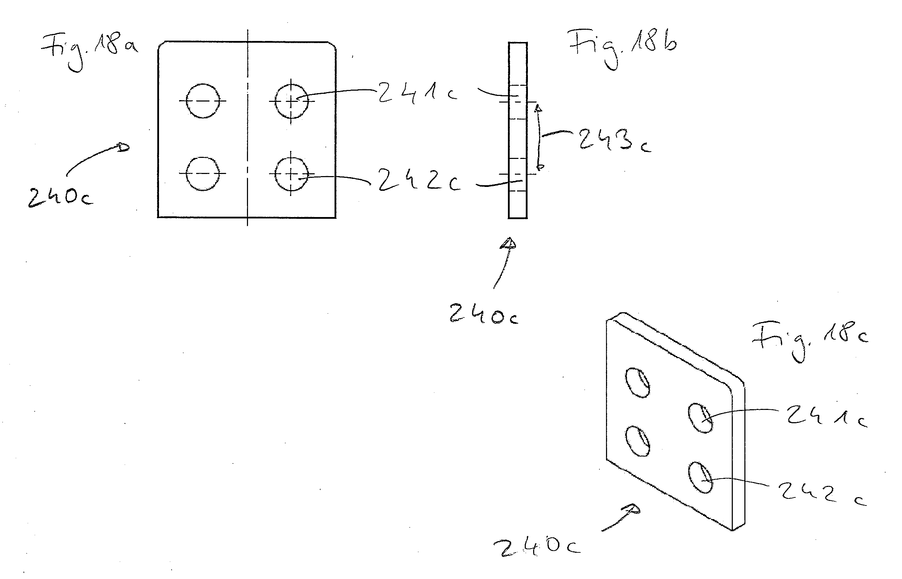

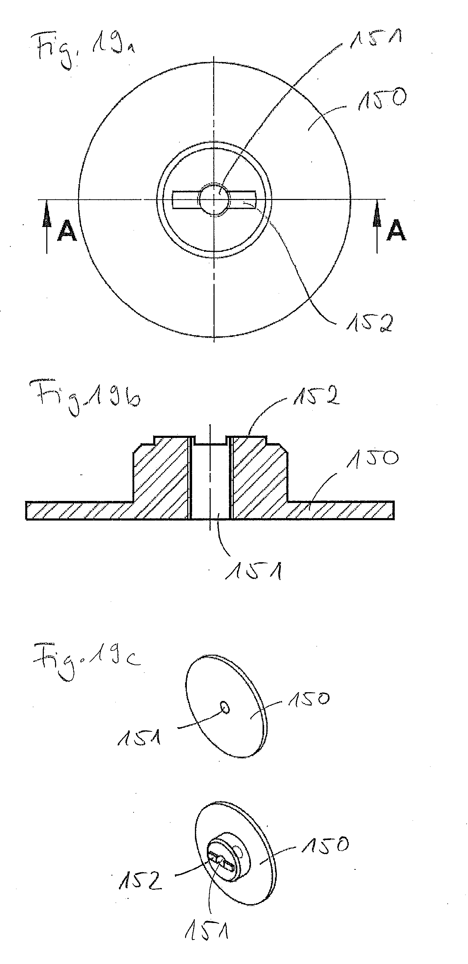

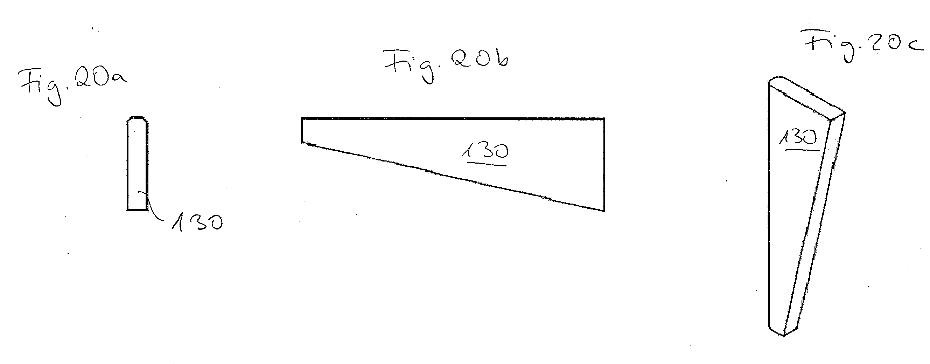

Im Folgenden wird der Aufbau der ersten und zweiten Arretierelemente 100 a, b, c, 200 a, b, c insbesondere mit Blick auf die Figuren 4 bis 20 näher erläutert. Zur besseren Lesbarkeit wird dabei im Folgenden auf die Nennung von a, b, c hinter den Bezugszeichen verzichtet. Die Ausführungen gelten, sofern nicht anders erläutert, jeweils für alle drei Ausführungsformen a, b, c.

Die Arretierelemente 100, 200 weisen eine Grundplatte 110, 210, die an die Form der kreisförmigen Lochscheibe 300 angepasst ist, und einen Anschlagabschnitt 115 auf. An der Grundplatte 110, 210 sind jeweils zwei Befestigungsvorrichtungen 111, 113, 211, 213 zur lösbaren Befestigung der Arretierelemente 100, 200 an der Lochplatte 300 vorgesehen. Mit den Befestigungsvorrichtungen 111, 113, 211, 213 wirken Muttern 150 zusammen. Die Vertiefungen 111, 113, 211, 213 weisen mittig jeweils ein Loch auf sowie eine weitere, schlitzförmige Vertiefung 112, 114, 212, 214. Die Befestigungsvorrichtungen 111, 113, 211, 213 sind so auf der Grundplatte 110, 210 angeordnet, dass die in zwei benachbarte Ausnehmungen 310 der Lochplatte 300 einsteckbar sind und in die Befestigungsvorrichtungen 111, 113, 211, 213 von der gegenüberliegenden Seite der Lochscheibe 300 jeweils eine Mutter 150 eingesteckt werden kann. Die für alle Befestigungsvorrichtungen 111, 113, 211, 213 gleich ausgebildeten Muttern 150 sind hutförmig ausgebildet und weisen eine Erhebung 152 auf, die in schlitzförmige Vertiefungen 112, 114, 212, 214 der Befestigungsvorrichtungen 111, 113, 211, 213 eingreifen kann. Über die Ausnehmung 151 und die mittigen Löcher in den Befestigungsvorrichtungen 111, 113, 211, 213 können die Muttern mit den Grundplatten 110, 210 verschraubt und somit die Grundplatte 110, 210 an der zwischen der Grundplatte 110, 210 und den Muttern 150 angeordneten Lochscheibe 300 sicher befestigt werden.

Zur Bereitstellung der Anschlagfläche 121, 221 zum Angriff der Arretierelemente 100, 200 an den Gussrahmen 410, 420 und damit am Grundrahmen sehen die beispielhaften Ausführungsformen 10 der erfindungsgemäßen mobilen Rotorarretiervorrichtung die folgende Ausgestaltung vor: Der Anschlagabschnitt 115, 215 der Grundplatten 110, 210 ist ausgebildet, jeweils einen Fixierkeil 120, 220 aufzunehmen. Der Anschlagabschnitt 115 weist eine schlitzförmige Ausnehmung 116 sowie zwei Sacklöcher 117 auf. Weiterhin sind die Seitenwände 118 dieses Abschnitts leicht erhöht. Zwischen die Seitenwände 118 wird der Fixierkeil 120, 220 aufgesetzt und ein Verbindungskeil 130, der für sämtliche Ausführungsvarianten gleich ausgestaltet sein kann, durch die schlitzförmige Ausnehmung 123, 223 des Fixierkeils 120, 220 und die schlitzförmige Ausnehmung 116, 216 der Grundplatten 110, 210 geführt bzw. geschlagen. Eine Verbindungsplatte 140, 240 wird anschließend mit dem Fixierkeil 120, 220 und der Grundplatte 110, 210 verschraubt. Dazu weist die Verbindungsplatte 140, 240 vier Ausnehmungen 141, 142, 241, 242 auf, in die Schrauben zur Aufnahme in den Löcher 117, 124 der Grundplatte 110, 210 und des Fixierkeils 120, 220 verschraubt werden können. Der Abstand 143, 243 zwischen den beiden Ausnehmungen 141, 241 und den beiden Ausnehmungen 142, 242 der Verbindungsplatte 140, 240 ist dabei auf die Abmessungen der verschiedenen Varianten der Grundplatten 110, 210 und Fixierkeile 120, 220 abgestimmt.

Zusammen ergeben die in den Figuren 1 bis 20 dargestellten Elemente einen Bausatz zur Zusammenstellung einer mobilen Rotorarretiervorrichtung, in dem die jeweiligen ersten und zweiten Arretierelemente 100, 200 je nach Modell und Montagezustand des Rotors auf der Hauptwelle ausgewählt werden können, so dass für das jeweils infrage kommende Windenergieanlagenmodell in einem bestimmten Montagezustand die Arretierung eines Rotorblatts in der exakten 6-Uhr-Position sichergestellt werden kann.

## Patentansprüche

1. Mobile Rotorarretiervorrichtung (10 a, b, c) zum Arretieren eines Rotors einer Windenergieanlage, wobei die Rotorarretiervorrichtung ausgebildet ist, einen Rotor derart zu arretieren, dass er an einer Drehung um eine horizontale Achse gehindert und die Längsachse eines Rotorblatts in einer vertikalen Ebene, nämlich in einer sogenannten "6-Uhr-Position", fixiert ist,
wobei die Rotorarretiervorrichtung ausgebildet ist, eine Hauptwelle (330 a, b, c), auf der ein Rotor drehmomentsteif angeordnet ist, gegen eine Drehung um ihre Längsachse zu fixieren, wobei die Rotorarretiervorrichtung ein erstes und ein zweites Arretierelement (100 a, b, c, 200a, b, c) umfasst, wobei vorzugsweise das erste Arretierelement (100 a, b, c) ausgebildet ist, eine Hauptwelle (330 a, b, c) gegen eine Drehung um ihre Längsachse in einer ersten Richtung zu fixieren und das zweite Arretierelement (200 a, b, c) ausgebildet ist, eine Hauptwelle gegen eine Drehung um ihre Längsachse in einer zweiten, der ersten entgegengesetzten, Richtung zu fixieren,
**dadurch gekennzeichnet, dass** jedes der beiden Arretierelemente (100 a, b, c, 200a, b, c) eine Befestigungsvorrichtung zur Befestigung des Arretierelements an einer Hauptwelle (330 a, b, c) und weiterhin eine Anlagefläche (121 a, b, c, 221 a, b, c) zur Übertragung von Druckkräften auf einen ortsfesten Grundrahmen aufweist, wobei ferner jedes der beiden Arretierelemente (100 a, b, c, 200a, b, c) eine Grundplatte (110 a, b, c, 210 a, b, c) und einen Fixierkeil (120 a, b, c, 220 a, b, c) aufweist, und die Grundplatte (110 a, b, c, 210 a, b, c) einen Anschlagabschnitt (115 a, b, c, 215 a, b, c) aufweist.

2. Mobile Rotorarretiervorrichtung (10 a, b, c) nach dem vorhergehenden Anspruch,
**dadurch gekennzeichnet, dass** der Fixierkeil eine Ausnehmung zur Aufnahme eines Verbindungskeils (130) aufweist.

3. Mobile Rotorarretiervorrichtung (10 a, b, c) nach dem vorhergehenden Anspruch,
**dadurch gekennzeichnet, dass**, der Anschlagabschnitt eine Ausnehmung zur Aufnahme eines Verbindungskeils (130) aufweist.

4. Mobile Rotorarretiervorrichtung (10 a, b, c) nach einem der beiden vorhergehenden Ansprüche,
**dadurch gekennzeichnet, dass** jedes Arretierelement (100 a, b, c, 200a, b, c) eine Verbindungsplatte (140 a, b, c, 240 a, b, c) aufweist, das ausgebildet ist, die Grundplatte (110 a, b, c, 210 a, b, c) und den Fixierkeil (120 a, b, c, 220 a, b, c) des ersten und des zweiten Arretierelements jeweils miteinander zu verbinden.

5. Mobile Rotorarretiervorrichtung (10 a, b, c) nach einem der vorhergehenden Ansprüche,
**dadurch gekennzeichnet, dass** das zweite Arretierelement (200a, b, c) gegenüber dem ersten Arretierelement (200a, b, c) unterschiedliche Abmessungen aufweist.

6. Bausatz für eine mobile Rotorarretiervorrichtung (10 a, b, c) nach einem der vorhergehenden Ansprüche,
**dadurch gekennzeichnet, dass** der Bausatz zwei oder mehrere unterschiedliche Arretierelemente (100 a, b, c, 200a, b, c) aufweist mit vorzugsweise zwei oder mehreren unterschiedlichen Fixierkeilen (120 a, b, c, 220 a, b, c) und/oder zwei oder mehreren unterschiedlichen Verbindungsplatten (140 a, b, c, 240 a, b, c), wobei ein erstes der Arretierelemente (100 a, b, c) ausgebildet ist, eine Hauptwelle (330 a, b, c) gegen eine Drehung um ihre Längsachse in einer ersten Richtung zu fixieren und ein zweites der Arretierelemente (200 a, b, c) ausgebildet ist, eine Hauptwelle gegen eine Drehung um ihre Längsachse in einer zweiten, der ersten entgegengesetzten, Richtung zu fixieren, und
jedes der beiden Arretierelemente (100 a, b, c, 200a, b, c) eine Befestigungsvorrichtung zur Befestigung des Arretierelements an einer Hauptwelle (330 a, b, c) und weiterhin eine Anlagefläche (121 a, b, c, 221 a, b, c) zur Übertragung von Druckkräften auf einen ortsfesten Grundrahmen aufweist, wobei ferner jedes der beiden Arretierelemente (100 a, b, c, 200a, b, c) eine Grundplatte (110 a, b, c, 210 a, b, c) und einen Fixierkeil (120 a, b, c, 220 a, b, c) aufweist, und die Grundplatte (110 a, b, c, 210 a, b, c) einen Anschlagabschnitt (115 a, b, c, 215 a, b, c) aufweist.

7. Arretierelement für eine mobile Rotorarretiervorrichtung (10 a, b, c) zum Arretieren eines Rotors einer Windenergieanlage,
wobei das Arretierelement (100 a, b, c, 200a, b, c) ausgebildet ist, eine Hauptwelle (330 a, b, c) gegen eine Drehung um ihre Längsachse in nur eine Richtung zu fixieren,
**dadurch gekennzeichnet, dass** das Arretierelement (100 a, b, c, 200a, b, c) eine Befestigungsvorrichtung zur Befestigung des Arretierelements an einer Hauptwelle (330 a, b, c) und weiterhin eine Anlagefläche (121 a, b, c, 221 a, b, c) zur Übertragung von Druckkräften auf einen ortsfesten Grundrahmen aufweist, wobei ferner das Arretierelement (100 a, b, c, 200a, b, c) eine Grundplatte (110 a, b, c, 210 a, b, c) und einen Fixierkeil (120 a, b, c, 220 a, b, c) aufweist, und die Grundplatte (110 a, b, c, 210 a, b, c) einen Anschlagabschnitt (115 a, b, c, 215 a, b, c) aufweist.

8. Verfahren zum Arretieren eines Rotors einer Windenergieanlage, umfassend die Schritte:
- Bereitstellen einer mobilen Rotorarretiervorrichtung (10 a, b, c),
- Arretieren eines Rotors derart, dass er an einer Drehung um eine horizontale Achse gehindert und die Längsachse eines Rotorblatts in einer vertikalen Ebene, nämlich in einer sogenannten "6-Uhr-Position", fixiert ist,
wobei der Schritt des Arretierens das Fixieren einer Hauptwelle (330 a, b, c), auf der ein Rotor drehmomentsteif angeordnet ist, gegen eine Drehung um ihre Längsachse beinhaltet, und wobei der Schritt des Fixierens einer Hauptwelle die folgenden Schritte umfasst:
- Fixieren einer Hauptwelle gegen eine Drehung um ihre Längsachse in einer ersten Richtung mittels eines ersten Arretierelements (100 a, b, c, 200a, b, c), und
- Fixieren einer Hauptwelle gegen eine Drehung um ihre Längsachse in einer zweiten, der ersten entgegengesetzten, Richtung mittels eines zweiten Arretierelements (100 a, b, c, 200a, b, c),
**dadurch gekennzeichnet, dass** jedes der beiden Arretierelemente (100 a, b, c, 200a, b, c) eine Befestigungsvorrichtung zur Befestigung des Arretierelements an einer Hauptwelle (330 a, b, c) und weiterhin eine Anlagefläche (121 a, b, c, 221 a, b, c) zur Übertragung von Druckkräften auf einen ortsfesten Grundrahmen aufweist, wobei ferner jedes der beiden Arretierelemente (100 a, b, c, 200a, b, c) eine Grundplatte (110 a, b, c, 210 a, b, c) und einen Fixierkeil (120 a, b, c, 220 a, b, c) aufweist, und die Grundplatte (110 a, b, c, 210 a, b, c) einen Anschlagabschnitt (115 a, b, c, 215 a, b, c) aufweist.

## Claims

1. Mobile rotor locking device (7.a a, b, c) for locking a rotor of a wind turbine, which rotor locking device is designed to lock a rotor so that it is prevented from rotating about a horizontal axis and the longitudinal axis of a rotor blade is fixed in a vertical plane, namely in a so-called "6 o'clock position", and the rotor locking device is designed to fix a main shaft (330 a, b, c) on which a rotor is disposed in a torsionally stiff arrangement to prevent a rotation about its longitudinal axis, and the rotor locking device comprises a first and a second locking member (100 a, b, c, 200 a, b, c), the first locking member (100 a, b, c) preferably bering designed to fix a main shaft (330 a, b, c) to prevent a rotation about its longitudinal axis in a first direction and the second locking member (200 a, b, c) being designed to fix a main shaft to prevent a rotation about its longitudinal axis in a second direction opposite the first direction,
**characterised in that** each of the two locking members (100 a, b, c, 200 a, b, c) comprises a fixing device for fixing the locking member on a main shaft (330 a, b, c) as well as a contract surface (121 a, b, c, 221 a, b, c) for transmitting compressive forces to a stationary base frame, and each of the two locking members (100 a, b, c, 200 a, b, c) further comprises a base plate (110 a, b, c, 210 a, b, c) and a fixing wedge (120 a, b, c, 220 a, b, c), and the base plate (110 a, b, c, 210 a, b, c) comprises a stop portion (115 a, b, c, 215 a, b, c).

2. Mobile rotor locking device (10 a, b, c) as claimed in the preceding claim
**characterised in that** the fixing wedge comprises a recess for accommodating a connecting wedge (130).

3. Mobile rotor locking device (10 a, b, c) as claimed in the preceding claim,
**characterised in that** the stop portion comprises a recess for accommodating a connecting wedge (130).

4. Mobile rotor locking device (10 a, b, c) as claimed in one the two preceding claims,
**characterised in that** each locking member (100 a, b, c, 200 a, b, c) comprises a connecting plate (140 a, b, c, 240 a, b, c) which is designed to connect the base plate (110 a, b, c, 210 a, b, c) and the fixing wedge (120 a, b, c, 220 a, b, c) of the first and second locking member respectively to one another.

5. Mobile rotor locking device (10 a, b, c) as claimed in one of the preceding claims,
**characterised in that** the second locking member (200 a, b, c) has different dimensions from the first locking member (200 a, b, c).

6. Kit for a mobile rotor locking device (10 a, b, c) as claimed in one of the preceding claims,
**characterised in that** the kit comprises two or more different locking members (100 a, b, c, 200 a, b, c) with preferably two or more different fixing wedges (120 a, b, c, 220 a, b, c) and/or two or more different connecting plates (140 a, b, c, 240 a, b, c) a first one of the locking members (100 a, b, c) being designed to fix a main shaft (330 a, b, c) to prevent a rotation about its longitudinal axis in a first direction and a second one of the locking members (200 a, b, c) being designed to fix a main shaft to prevent a rotation about its longitudinal axis in a second direction opposite the first direction, and
each of the two locking members (100 a, b, c, 200 a, b, c) comprises a fixing device for fixing the locking member on a main shaft (330 a, b, c) as well as a contract surface (121 a, b, c, 221 a, b, c) for transmitting compressive forces to a stationary base frame, and each of the locking members (100 a, b, c, 200 a, b, c) further comprises a base plate (110 a, b, c, 210 a, b, c) and a fixing wedge (120 a, b, c, 220 a, b, c), and the base plate (110 a, b, c, 210 a, b, c) comprises a stop portion (115 a, b, c, 215 a, b, c)

7. Looking member for a mobile rotor locking device (10 a, b, c) for locking a rotor of a wind turbine,
which locking member (100 a, b, c, 200 a, b, c) is designed to fix a main shaft (330 a, b, c) to prevent a rotation about its longitudinal axis in only one direction,
**characterised in that** the locking member (100 a, b, c, 200 a, b, c) comprises a fixing device for fixing the locking member on a main shaft (330 a, b, c) as well as a contact surface (121 a, b, c, 221 a, b, c) for transmitting compressive forces to a stationary base frame, and the locking member (100 a, b, c, 200 a, b, c) further comprises a base plate (110 a, b, c, 210 a, b, c) and a fixing wedge (120 a, b, c, 220 a, b, c), and the base plate (110 a, b, c, 210 a, b, c) comprises a stop portion (115 a, b, c, 215 a, b, c).

8. Method of locking a rotor of a wind turbine, comprising the steps:
- providing a mobile rotor locking device (10 a, b, c),
- locking a rotor so that it is prevented from rotating about a horizontal axis and the longitudinal axis of a rotor blade is fixed in a vertical plane, namely in a so-called "6 o'clock position",
and the locking step includes fixing a main shaft (330 a, b, c) on which a rotor is disposed in a torsionally rigid arrangement to prevent a rotation about its longitudinal axis, and the step of fixing a main shaft comprises the following steps;
- fixing a main shaft to prevent a rotation about its longitudinal axis in a first direction by means of a first locking member (100 a, b, c 200 a, b, c), and
- fixing a main shaft to prevent a rotation about its longitudinal axis in a second direction opposite the first direction by means of a second locking member (100 a, b, c, 200 a, b, c),
**characterised in that** each of the two locking members (100 a, b, c, 200 a, b, c) comprises a fixing device for fixing the locking member on a main shaft (330 a, b, c) as well as a contact surface (121 a, b, c, 221 a, b, c) for transmitting compressive forces to a stationary base frame, and each of the two locking members (100 a, b, c, 200 a, b, c) further comprises a base plate (110 a, b, c, 210 a, b, c) and a fixing wedge (120 a, b, c, 220 a, b, c), and the base plate (110 a, b, c, 210 a, b, c) comprises a stop portion (115 a, b, c, 215 a, b, c).

## Revendications

1. Dispositif de blocage de rotor (10 a, b, c) mobile servant à bloquer un rotor d'une éolienne, le dispositif de blocage de rotor étant réalisé pour bloquer un rotor de telle manière que sa rotation autour d'un axe horizontal est limitée et que l'axe longitudinal d'une pale de rotor est immobilisé dans une plan vertical, à savoir ce qu'on appelle une « position à 6 heures »,
le dispositif de blocage de rotor étant réalisé pour immobiliser un arbre principal (330 a, b, c), sur lequel est disposé de manière rigide en couple de rotation un rotor, pour empêcher toute rotation autour de son axe longitudinal, le dispositif de blocage de rotor comprenant un premier et un deuxième élément de blocage (100 a, b, c, 200 a, b, c), le premier élément de blocage (100 a, b, c) étant réalisé de préférence pour immobiliser dans une première direction un arbre principal (330 a, b, c) pour empêcher toute rotation autour de son axe longitudinal dans la première direction et le deuxième élément de blocage (200 a, b, c) étant réalisé pour immobiliser dans une deuxième direction opposée à la première un arbre principal pour empêcher toute rotation autour de son axe longitudinal dans la deuxième direction,
**caractérisé en ce que** chacun des deux éléments de blocage (100 a, b, c, 200 a, b, c) présente un dispositif de fixation servant à fixer l'élément de blocage au niveau d'un arbre principal (330 a, b, c) et, par ailleurs, une surface d'appui (121 a, b, c, 221 a, b, c) servant à transmettre des forces de pression sur un châssis de base stationnaire, chacun des deux éléments de blocage (100 a, b, c, 200 a, b, c) présentent en outre une plaque de base (110 a, b, c, 210 a, b, c) et une cale d'immobilisation (120 a, b, c, 220 a, b, c) et la plaque de base (110 a, b, c, 210 a, b, c) présentant une portion de butée (115 a, b, c, 215 a, b, c).

2. Dispositif de blocage de rotor (10 a, b, c) mobile selon la revendication précédente, **caractérisé en ce que** la cale d'immobilisation présente un évidement servant à recevoir une cale de liaison (130).

3. Dispositif de blocage de rotor (10 a, b, c) mobile selon la revendication précédente, **caractérisé en ce que** la portion de butée présente un évidement servant à recevoir une cale de liaison (130).

4. Dispositif de blocage de rotor (10 a, b, c) mobile selon l'une quelconque des deux revendications précédentes,
**caractérisé en ce que** chaque élément de blocage (100 a, b, c, 200 a, b, c) présente une plaque de liaison (140 a, b, c, 240 a, b, c), qui est réalisée pour relier l'une à l'autre la plaque de base (110 a, b, c, 210 a, b, c) et la cale d'immobilisation (120 a, b, c, 220 a, b, c) du premier et du deuxième élément de blocage respectivement.

5. Dispositif de blocage de rotor (10 a, b, c) mobile selon l'une quelconque des revendications précédentes,
**caractérisé en ce que** le deuxième élément de blocage (200 a, b, c) présente des dimensions différentes par rapport au premier élément de blocage (200 a, b, c).

6. Kit de montage pour un dispositif de blocage de rotor (10 a, b, c) mobile selon l'une quelconque des revendications précédentes,
**caractérisé en ce que** le kit de montage présente deux ou plusieurs éléments de blocage (100 a, b, c, 200 a, b, c) différentes pourvus de préférence de deux ou de plusieurs cales d'immobilisation (120 a, b, c, 220 a, b, c) différentes et/ou de deux ou de plusieurs plaques de liaison (140 a, b, c, 240 a, b, c) différentes, un premier des éléments de blocage (100 a, b, c) étant réalisé pour immobiliser dans une première direction un arbre principal (330 a, b, c) pour empêcher toute rotation autour de son axe longitudinal dans la première direction et un deuxième des éléments de blocage (200 a, b, c) étant réalisé pour immobiliser dans une deuxième direction opposée à la première un arbre principal pour empêcher toute rotation autour de son axe longitudinal dans la deuxième direction, et
**en ce que** chacun des deux éléments de blocage (100 a, b, c, 200 a, b, c) présente un dispositif de fixation servant à fixer l'élément de blocage au niveau d'un arbre principal (330 a, b, c) et, par ailleurs, une surface d'appui (121 a, b, c, 221 a, b, c) servant à transmettre des forces de pression sur un châssis de base stationnaire, chacun des deux éléments de blocage (100 a, b, c, 200 a, b, c) présentant en outre une plaque de base (110 a, b, c, 210 a, b, c) et une cale d'immobilisation (120 a, b, c, 220 a, b, c) et la plaque de base (110 a, b, c, 210 a, b, c) présentant une portion de butée (115 a, b, c, 215 a, b, c).

7. élément de blocage pour un dispositif de blocage de rotor (10 a, b, c) mobile servant à bloquer un rotor d'une étolienne,
l'élément de blocage (100 a, b, c, 200 a, b, c) étant réalisé pour immobiliser dans uniquement une direction un arbre principal (330 a, b, c) pour empêcher toute rotation autour de son axe longitudinal dans cette direction,
**caractérisé en ce que** l'élément de blocage (100 a, b, c, 200 a, b, c) présente une dispositif de fixation servant à fixer l'élément de blocage au niveau d'un arbre principal (330 a, b, c), et, par ailleurs, une surface d'appui (121 a, b, c, 221 a, b, c) servant à transmettre des forces de pression sur un châssis de base stationnaire, l'élément de blocage (100 a, b, c, 200 a, b, c) présentant en outre une plaque de base (110 a, b, c, 210 a, b, c) et une cale d'immobilisation (120 a, b, c, 220 a, b, c) et la plaque de base (110 a, b, c, 210 a, b, c) présentant une portion de butée (115 a, b, c, 215 a, b, c),

8. Procédé servant à bloquer un rotor d'une éolienne,
comprenait les étapes suivantes :
- la mise à disposition d'un dispositif de blocage de rotor (10 a, b, c) mobile ;
- le blocage d'un rotor de telle manière que sa rotation autour d'un axe horizontal est limitée et que l'axe longitudinal d'une pale de rotor est immobilisé dans un plan vertical, à savoir dans ce qu'on appelle une « position à 6 heures »,
l'étape du blocage incluant l'immobilisation d'un arbre principal (330 a, b, c), sur lequel est disposé, de manière rigide en couple de rotation, un rotor, pour empêcher toute rotation autour de son axe longitudinal, et l'étape de l'immobilisation d'un arbre principal comprenant les étapes suivantes :
- l'immobilisation, dans une première direction, au moyen d'un premier élément de blocage (100 a, b, c, 200 a, b, c), d'un arbre principal pour empêcher toute rotation autour de son axe longitudinal dans la première direction, et
- l'immobilisation, dans une deuxième direction opposée à la première, au moyen d'un deuxième élément de blocage (100 a, b, c, 200 a, b, c), d'un arbre principal pour empêcher toute rotation autour de son axe longitudinal dans la deuxième direction, **caractérisé en ce que** chacun des deux éléments de blocage (100 a, b, c, 200 a, b, c) présente un dispositif de fixation servant à fixer l'élément de blocage au niveau d'un arbre principal (330 a, b, c) et, par ailleurs, une surface d'appui (121 a, b, c, 221 a, b, c) servant à transmettre des forces de pression sur un châssis de base stationnaire, chacun des deux éléments de blocage (100 a, b, c, 200 a, b, c) présentant en outre une plaque de base (110 a, b, c, 210 a, b, c) et une cale d'immobilisation (120 a, b, c, 220 a, b, c) et la plaque de base (110 a, b, c, 210 a, b, c) présentent une portion de butée (115 a, b, c, 215 a, b, c).
